(19) Europäisches Patentamt
European Patent Office
Office européen des brevets

(11) EP 4 592 966 A1

(12) **EUROPEAN PATENT APPLICATION**

(43) Date of publication:
**30.07.2025 Bulletin 2025/31**

(21) Application number: **25154338.5**

(22) Date of filing: **28.01.2025**

(51) International Patent Classification (IPC):
***G06T 19/00*** *(2011.01)* ***G06T 15/10*** *(2011.01)*

(52) Cooperative Patent Classification (CPC):
**G06T 19/00; G06T 15/10;** G06T 2219/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:
**29.01.2024 JP 2024011313**
**29.01.2024 JP 2024011356**
**15.10.2024 JP 2024180209**
**29.11.2024 JP 2024208349**
**29.11.2024 JP 2024208328**

(71) Applicant: **Ricoh Company, Ltd.**
**Tokyo 143-8555 (JP)**

(72) Inventors:
- **MOTOHASHI, Naoki**
  **Tokyo, 143-8555 (JP)**
- **ARAKI, Shigeo**
  **Tokyo, 143-8555 (JP)**
- **MATSUNO, Yoichiro**
  **Tokyo, 143-8555 (JP)**
- **HINOHARA, Hiroshi**
  **Japan, 143-8555 (JP)**

(74) Representative: **SSM Sandmair Patentanwälte Rechtsanwalt Partnerschaft mbB**
**Joseph-Wild-Straße 20**
**81829 München (DE)**

# (54) INFORMATION PROCESSING APPARATUS, SCREEN GENERATION METHOD, CARRIER MEANS, AND INFORMATION PROCESSING SYSTEM

(57) An information processing apparatus (5) includes a processing unit (501, 54) to associate first position information indicating a first position in a captured image with second position information indicating a second position in a three-dimensional image. The captured image is obtained by capturing an image of a target object. The three-dimensional image includes a three-dimensional area corresponding to the target object. The information processing apparatus (5) includes a generation unit (501, 53) to generate a screen including a first display area and a second display area. The first display area displays a predetermined-area image that is a predetermined area in the captured image. The second display area displays at least a part of the three-dimensional image in which the second position is associated with the first position in the captured image by the processing unit (501, 54).

FIG. 24

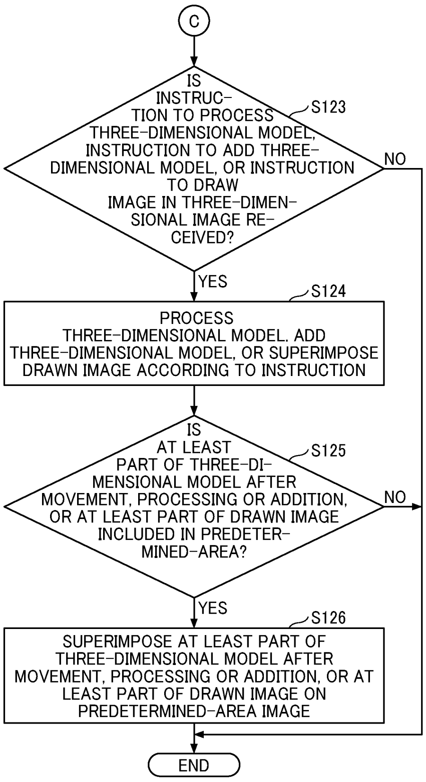


EP 4 592 966 A1

# Description

## BACKGROUND

### Technical Field

The present disclosure relates to an information processing apparatus, a screen generation method, a carrier means, and an information processing system.

### Related Art

Currently, wide-field images with a wide field of view, such as 360-degree images (spherical images, omnidirectional images, or all-round images) capturing the entire surrounding area, are known as imaging ranges that include areas not covered by the standard field of view.

When the entire wide-field image is displayed on a display terminal, the wide-field image is curved, and a user has difficulty viewing the displayed wide-field image. To cope with this, the display terminal displays a predetermined-area image indicating a predetermined area in the wide-field image to allow the user to view the predetermined-area image (for example, Japanese Unexamined Patent Publication Application No. 2023-010923).

Viewing a predetermined-area image in a displayed range is not enough for a user to grasp what is captured in a predetermined-area image and where the predetermined-area image is captured.

Further, an image capturing device images objects in the surroundings of the image capturing device at 360 degrees by a single imaging process from an image capturing position. However, the image capturing device does not image an object from all 360-degree directions relative to the object. Accordingly, even if the object is within the imaging range, for example, the back of the object can fail to be captured and the user fails to grasp the state of the back of the object.

The above-described problem also occurs when the captured image is not a wide-field image that is a curved image.

## SUMMARY

According to an aspect of the present disclosure, an information processing apparatus includes a processing unit to associate first position information indicating a first position in a captured image with second position information indicating a second position in a three-dimensional image. The captured image is obtained by capturing an image of a target object. The three-dimensional image includes a three-dimensional area corresponding to the target object. The information processing apparatus includes a generation unit to generate a screen including a first display area and a second display area. The first display area displays a predetermined-area image that is a predetermined area in the captured image. The second display area displays at least a part of the three-dimensional image in which the second position is associated with the first position in the captured image by the processing unit.

According to an aspect of the present disclosure, a screen generation method includes associating first position information indicating a first position in a captured image with second position information indicating a second position in a three-dimensional image. The captured image is obtained by capturing an image of a target object. The three-dimensional image includes a three-dimensional area corresponding to the target object. The method includes generating a screen including a first display area and a second display area. The first display area displays a predetermined-area image that is a predetermined area in the captured image. The second display area displays the three-dimensional image in which the second position is associated with the first position in the captured image.

According to an aspect of the present disclosure, a carrier means carrying computer-readable codes for controlling a computer to carry out the above-described method.

According to an aspect of the present disclosure, an information processing system includes an information processing apparatus and a display terminal communicably connected to the information processing apparatus. The information processing apparatus includes a processing unit to associate first position information indicating a first position in a captured image with position information indicating a second position in a three-dimensional image. The captured image is obtained by capturing an image of a target object. The three-dimensional image includes a three-dimensional area corresponding to the target object. The information processing apparatus includes a generation unit to generate a screen including a first display area and a second display area. The first display area displays a predetermined-area image that is a predetermined area in the captured image. The second display area displays the three-dimensional image in which the second position is associated with the first position in the captured image by the processing unit. The display terminal includes a display control unit configured to cause a display to display the screen generated by the generation unit.

According to an aspect of the present disclosure, generating an image that complements a captured image obtained by image capturing enhances user convenience.

## BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1A is a left side view of an image capturing device;
FIG. 1B is a front view of the image capturing device of FIG. 1A;
FIG. 1C is a plan view of the image capturing device of FIG. 1A;
FIG. 2 is a diagram illustrating how the image capturing device of FIGS. 1A to 1C is used;
FIG. 3A is a diagram illustrating a hemispherical image (front side) captured by the image capturing device of FIGS. 1A to 1C;
FIG. 3B is a diagram illustrating a hemispherical image (back side) captured by the image capturing device of FIGS. 1A to 1C;
FIG. 3C is a diagram illustrating an image represented by Mercator projection;
FIG. 4A is a diagram illustrating how a Mercator projection image covers the surface of a sphere;
FIG. 4B is a diagram illustrating a spherical image;
FIG. 5 is an illustration of the relative positions of a virtual camera and a predetermined area in a case where a spherical image is represented as a surface area of a three-dimensional solid sphere;
FIG. 6A is a perspective view of FIG. 5;
FIG. 6B is a diagram illustrating a predetermined-area image of FIG. 6A being displayed on a display;
FIG. 6C is a diagram illustrating a predetermined area after the viewpoint of a virtual camera in FIG. 6A is changed;
FIG. 6D is a diagram illustrating a predetermined-area image of FIG. 6C being displayed on a display;
FIG. 7 is a diagram illustrating points in a three-dimensional Euclidean space defined in spherical coordinates;
FIG. 8 is a diagram illustrating a relation between a predetermined area and a point of interest;
FIG. 9 is a schematic diagram of a communication system;
FIG. 10 is a block diagram illustrating a hardware configuration of the image capturing device of FIGS. 1A to 1C;
FIG. 11 is a block diagram illustrating a hardware configuration of a relay device;
FIG. 12 is a block diagram illustrating a hardware configuration of any one of a communication control apparatus and a communication terminal;
FIG. 13 is a block diagram illustrating a functional configuration of the communication system of FIG. 9;
FIG. 14 is a schematic diagram of a user device management table;
FIG. 15 is a schematic diagram of a virtual room management table;
FIG. 16A is a schematic diagram of a three-dimensional image management table;
FIG. 16B is a schematic diagram of another three-dimensional image management table;
FIG. 17 is a sequence diagram illustrating a communication process in relation to content data in the communication system of FIG. 9;
FIG. 18 is a sequence diagram illustrating a process for starting image recording and sound recording in the communication system of FIG. 9;
FIG. 19 is a sequence diagram illustrating a process for stopping image recording and sound recording in the communication system of FIG. 9;
FIG. 20 is a sequence diagram illustrating a process for playback of a recorded image and recorded sound in the communication system of FIG. 9;
FIG. 21 is a diagram illustrating a recorded data selection screen;
FIG. 22 is a flowchart of a part of a screen display process performed by the communication control apparatus of FIG. 12;
FIG. 23 is a flowchart of another part of the screen display process performed by the communication control apparatus of FIG. 12;
FIG. 24 is a flowchart of still another part of the screen display process performed by the communication control apparatus of FIG. 12;
FIG. 25 is a diagram illustrating an example of an initial display screen displayed on the communication terminal of FIG. 12;
FIG. 26 is a diagram illustrating a screen displaying a three-dimensional image in which the position and the field of view of a virtual camera have been changed from those in a three-dimensional image illustrated in FIG. 25;
FIGS. 27A to 27D are diagrams each illustrating a different position of a virtual camera;
FIGS. 27E to 27H are diagrams illustrating three-dimensional images displayed corresponding to the respective positions of the virtual camera illustrated in FIGS. 27 A to 27D;
FIG. 28 is a diagram illustrating a screen in which a predetermined-area image is enlarged in accordance with the enlargement of a three-dimensional image;
FIG. 29 is a diagram illustrating a screen in which a predetermined-area image is reduced in size in accordance with the reduction of a three-dimensional image;
FIG. 30 is a diagram illustrating a screen in which a corresponding predetermined area, the icon of a virtual camera, and the line of sight of the virtual camera are displayed in a display area;
FIG. 31 is a diagram illustrating a screen in which a three-dimensional model is moved to be displayed in a display area and an image corresponding to the three-dimensional model is displayed in another display area; and
FIG. 32 is a diagram illustrating a screen in which a three-dimensional model is processed and added, a drawn image is added in a display area, and images corresponding to the three-dimensional model and the drawn image are displayed in another display area.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

## DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the attached drawings.

### Overview of Spherical Image

A method for generating a spherical image is described with reference to FIGS. 1 (1A to 1C) to 8. The spherical image is also referred to as a spherical panoramic image or a 360-degree panoramic image. The spherical image is an example of a wide-field video (wide-field moving image) having a wide field of view. The wide-field image includes a 180-degree panoramic image.

An external view of an image capturing device 10 is described with reference to FIG. 1 (FIGS. 1A to 1C). The image capturing device 10 is a digital camera for obtaining a captured image to be a spherical image. FIG. 1A, FIG. 1B, and FIG. 1C are a left side view, a front view, and a plan view, respectively, of the image capturing device 10.

As illustrated in FIG. 1A, the image capturing device 10 is sized to be held by hand. As illustrated in FIGS. 1A to 1C, the image capturing device 10 is provided with an imaging element 103a on the front side (anterior side) and an imaging element 103b on the back side (rear side) in the upper section. As illustrated in FIG. 1B, the image capturing device 10 is also provided with an operation unit 115 such as a shutter button on the back side.

The usage scenario of the image capturing device 10 is described below with reference to FIG. 2. FIG. 2 is an illustration of an example of how the image capturing device 10 is used. As illustrated in FIG. 2, the image capturing device 10 is communicably connected to a relay device 3 installed on a table 2 and is used to capture an image including the surrounding subjects and scenery. The imaging elements 103a and 103b illustrated in FIG. 1A to FIG. 1C capture the surrounding subjects of the user to obtain two hemispherical images. If the image capturing device 10 does not transmit the captured spherical images to another communication terminal or system, the relay device 3 is not needed.

An overview of a process of generating a spherical image from images captured by the image capturing device 10 is described below with reference to FIG. 3 (FIG. 3A to FIG. 3C) and FIG. 4 (FIG. 4A and FIG. 4B). FIG. 3A is a diagram illustrating a hemispherical image (front side) captured by the image capturing device 10. FIG. 3B is a diagram illustrating a hemispherical image (back side) captured by the image capturing device 10. FIG. 3C is a diagram illustrating an image in equirectangular projection. The image in equirectangular projection may be referred to as an "equirectangular projection image." For example, an image in Mercator projection may be used. The image in Mercator projection may be referred to as a "Mercator image." FIG. 4A is a diagram illustrating an equirectangular projection image to cover a sphere. FIG. 4B is a diagram illustrating a spherical image. The "equirectangular projection image" is a spherical image in an equirectangular format and is an example of the wide-field image described above.

As illustrated in FIG. 3A, an image captured by the imaging element 103a is a hemispherical image (front side) curved by a wide-angle lens 102a such as a fisheye lens, which is described later. As illustrated in FIG. 3B, an image captured by the imaging element 103b is a hemispherical image (back side) curved by a wide-angle lens 102b such as a fisheye lens, which is described later. The image capturing device 10 combines the hemispherical image (front side) and the hemispherical image (rear side) inverted by 180 degrees to create an equirectangular projection image EC as illustrated in FIG. 3C.

The image capturing device 10 uses Open Graphics Library for Embedded Systems (OpenGL ES) to map the equirectangular projection image EC in a manner that the sphere surface is covered as illustrated in FIG. 4A to generate a spherical image CE as illustrated in FIG. 4B. In other words, the spherical image CE is represented as an image corresponding to the equirectangular projection image EC oriented toward the center of the sphere. OpenGL ES is a graphic library used for visualizing two-dimensional (2D) data and three-dimensional (3D) data. OpenGL ES is an example of software that executes image processing. Software other than Open ES may be used to generate the spherical image CE. The spherical image CE is either a still image or a moving image. Although the image capturing device 10 generates a spherical image in the above description, another device, such as a communication control apparatus 5, a communication terminal 7, or a communication terminal 9, may perform substantially the same image processing or a part of the image processing instead of the image capturing device 10.

The equirectangular projection image EC is mapped to cover a sphere surface using OpenGL ES as illustrated in FIG. 4A to generate the spherical image CE as illustrated in FIG. 4B. In other words, the spherical image CE is represented as an image corresponding to the equirectangular projection image EC oriented toward the center of the sphere. OpenGL ES is a graphic library used for visualizing 2D data and 3D data.

As described above, since the spherical image CE is an image mapped to the sphere surface to cover the sphere surface, a part of the image may look distorted when viewed by the user, giving a feeling of strangeness. To cope with this, each of the communication terminals 7 and 9 displays a predetermined area that is a part of the spherical image CE as a planar image with little curvature, thus allowing display without giving a feeling of strangeness to the user. Such an image representing a part of a spherical image may be referred to as a predetermined-area image in the following description. A predetermined area and a predetermined-area image are described with reference to FIGS. 5 to 8.

FIG. 5 is an illustration of the relative positions of a virtual camera IC1 and a predetermined area T when the spherical image is represented as a three-dimensional solid sphere. The virtual camera IC1 corresponds to a position of the virtual viewpoint of a user viewing the spherical image CE represented as a surface area of the three-dimensional solid sphere. FIG. 6A is a perspective view of FIG. 5. FIG. 6B is a diagram illustrating a predetermined-area image of FIG. 6A being displayed on a display. FIG. 6C is a view illustrating a predetermined area after a viewpoint of the virtual camera IC1 in FIG. 6A is changed. FIG. 6D is a diagram illustrating the predetermined-area image of FIG. 6C being displayed on a display.

Assuming that the spherical image CE having been generated is the surface area of a solid sphere CS, the virtual camera IC1 is inside of the spherical image CE as illustrated in FIG. 5. The predetermined area T in the spherical image CE is an imaging area of the virtual camera IC1. Specifically, the predetermined area T is specified by field-of-view information indicating an imaging direction and a field of view of the virtual camera IC1 in a three-dimensional virtual space containing the spherical image CE. The field-of-view information may be referred to as "area information."

Further, zooming in the predetermined area T is also expressed by bringing the virtual camera IC1 closer to or away from the spherical image CE. A predetermined-area image Q is an image of the predetermined area T in the spherical image CE. The predetermined area T is defined by a field of view a and a distance f from the virtual camera IC1 to the spherical image CE.

When the virtual viewpoint of the virtual camera IC1 is moved (changed) from the state illustrated in FIG. 6A to the right (left in the drawing) as illustrated in FIG. 6C, the predetermined area T in the spherical image CE is moved to a predetermined area T', accordingly. Accordingly, the predetermined-area image Q displayed on a predetermined display is changed to a predetermined-area image Q'. As a result, the image displayed on the predetermined display changes from the image illustrated in FIG. 6B to the image illustrated in FIG. 6D.

A relation between the field-of-view information and the image of the predetermined area T is described below with reference to FIGS. 7 and 8.

FIG. 7 is a diagram illustrating a point in a three-dimensional Euclidean space according to spherical coordinates. FIG. 8 is a diagram illustrating a relation between the predetermined area T and a point of interest (center point) CP.

Positional coordinates (r, θ, φ) are given when the center point CP illustrated in FIG. 7 is represented by a spherical polar coordinate system. The positional coordinates (r, θ, φ) represent a radius vector, a polar angle, and an azimuth angle. The radius vector r is the distance from the origin of a three-dimensional virtual space including the spherical image CE to any point (the center point CP in FIG. 8). Accordingly, the radius vector r is equal to the distance "f" illustrated in FIG. 8.

Further, as illustrated in FIG. 8, when the center of the predetermined area T that is the imaging region of the virtual camera IC1 is considered as the center point CP in FIG. 7, a trigonometric function equation expressed by the following (Formula 1) is satisfied.

$$(L/f) = \tan(a/2) \quad \text{(Formula 1)}$$

"f" denotes the distance from the virtual camera IC1 to the center point CP of the predetermined area T. "L" is the distance between the center point CP and a given vertex of the predetermined area T (2L is a diagonal line). "a" is a field of view. In this case, the field-of-view information for specifying the predetermined area T can be represented by pan (θ), tilt (φ), and fov (a). Zooming of the predetermined area T is expressed by enlarging or reducing a range (arc) of the field angle a.

## Overview of Communication System

An overview of a communication system 1 is described below with reference to FIG. 9. FIG. 9 is a schematic diagram of the communication system 1.

As illustrated in FIG. 9, the communication system 1 includes the image capturing device 10, the relay device 3, the communication terminal 7, and the communication terminal 9 (communication terminals 9a and 9b). The communication system 1 is an example of an information processing system. The communication terminals 9a and 9b are collectively referred to as "communication terminal 9." The communication control apparatus 5, the communication terminal 7, and the communication terminal 9 are also examples of an information processing apparatus. Each of the communication terminals 7 and 9 may be referred to as a "display terminal" that displays, for example, an image.

The image capturing device 10 is a digital camera for obtaining a wide-field image, such as a spherical image, as described above. The relay device 3 has a cradle function for charging the image capturing device 10 and transmitting and receiving data to and from the image capturing device 10. The relay device 3 can communicate with the image capturing device 10 via a contact point and can communicate with the communication control apparatus 5 via a communication network 100. The communication network 100 includes the Internet, a local area network (LAN), and a (wireless) router.

The communication control apparatus 5 is, for example, a computer, and can communicate with the relay device 3 and the communication terminals 7 and 9 via the communication network 100. The communication control apparatus 5 manages, for example, field-of-view information, and thus can be referred to as an "information management apparatus."

The communication terminals 7 and 9 are computers such as smartphones, notebook personal computers (PCs), and can communicate with the communication control apparatus 5 via the communication network 100. Each of the communication terminals 7 and 9 is installed with OpenGL ES and creates a predetermined-area image (see FIG. 6) from a spherical image received from the communication control apparatus 5. The communication control apparatus 5 may be configured by a single computer or a plurality of computers.

Further, the image capturing device 10 and the relay device 3 are installed at predetermined positions by an organizer (user) X on a site Sa such as a construction site, exhibition venue, educational institution, or medical facility. The communication terminal 7 is operated (used) by the organizer X. The communication terminal 9a is operated (used) by a participant (user) A such as a viewer at a remote location from the site Sa. The communication terminal 9b is operated (used) by a participant (user) B such as a viewer at a remote location from the site Sa. The participant A and participant B may be at the same location or at different locations.

The communication control apparatus 5 transmits (distributes) the wide-field image obtained from the image capturing device 10 via the relay device 3 to the communication terminals 7 and 9. The communication control apparatus 5 transmits (distributes) the captured image obtained from each communication terminal 7 or 9 to the communication terminals 7 and 9. The captured image transmitted from the image capturing device 10 via the relay device 3 is a wide-field image, but when, for example, a single-lens reflex camera is used instead of the image capturing device 10, the captured image is a standard narrow-field image. The captured image may be a moving image or a still image.

## Hardware Configuration

Hardware configurations of the image capturing device 10, the relay device 3, the communication terminal 7, and the communication terminal 9 are described in detail with reference to FIGS. 10 to 12.

## Hardware Configuration of Image Capturing Device

FIG. 10 is a block diagram illustrating a hardware configuration of the image capturing device 10. As illustrated in FIG. 10, the image capturing device 10 includes an imaging unit 101, an image processor 104, an imaging controller 105, a microphone 108, an audio processor 109, a central processing unit (CPU) 111, a read-only memory (ROM) 112, a static random-access memory (SRAM) 113, a dynamic random-access memory (DRAM) 114, the operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes wide-angle lenses 102a and 102b (collectively referred to as lens 102 in the following description unless they need to be distinguished from each other), each having a field view of equal to or greater than 180 degrees so as to form a hemispherical image. The imaging unit 101 further includes the two imaging elements 103a and 103b corresponding to the lenses 102a and 102b respectively.

The imaging elements 103a and 103b each of which includes an imaging sensor such as a complementary metal oxide semiconductor (CMOS) sensor and a charge-coupled device (CCD) sensor, a timing generation circuit, and a group of registers. The imaging sensor converts an optical image formed by, for example, the lenses 102a and 102b into electrical signals to output image data. The timing generation circuit generates, for example, horizontal or vertical synchronization signals and pixel clocks for the imaging sensor. In the group of registers, for example, various commands and parameters for operations of the imaging elements 103a and 103b are set. The configuration in which the imaging unit 101 includes two wide-angle lenses is merely an example, and the imaging unit 101 may include a single wide-angle lens, or three or more wide-angle lenses.

Each of the imaging elements 103a and 103b of the imaging unit 101 is connected to the image processor 104 via a parallel I/F bus. By contrast, each of the imaging elements 103a and 103b of the imaging unit 101 is connected to the imaging controller 105 via a serial I/F bus, such as an internet integrated circuit (I2C) bus.

The image processor 104, the imaging controller 105, and the audio processor 109 are connected to the CPU 111 via a bus 110. Further, the ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data from each of the imaging elements 103a and 103b via the parallel I/F bus and performs predetermined processing on the image data. Then, the image processor 104 performs image data combining to generate equirectangular projection image data (an example of a wide-field image), which is described later.

The imaging controller 105 functions as a master device while each of the imaging elements 103a and 103b functions as a slave device, and the imaging controller 105 sets commands in the group of registers of each of the imaging elements 103a and 103b through the I2C bus. The imaging controller 105 receives commands from the CPU 111. The imaging controller 105 obtains status data of the group of registers of each of the imaging elements 103a and 103b through the I2C bus and transmits the status data to the CPU 111.

The imaging controller 105 instructs the imaging elements 103a and 103b to output the image data at a time when the shutter button of the operation unit 115 is pressed. In some cases, the image capturing device 10 displays a preview image on a display (e.g., a display of an external terminal such as a smartphone that performs short-range communication with the image capturing device 10 through the short-range communication circuit 117) or displays a moving image (movie). In the case of displaying a moving image, the image data is continuously output from the imaging elements 103a and 103b at a predetermined frame rate (frames per minute).

Further, the imaging controller 105 operates in conjunction with the CPU 111 to synchronize the output timings of image data between the imaging elements 103a and 103b. The image capturing device 10 according to the present embodiment does not include a display unit (display). However, in some embodiments, the image capturing device 10 may include a display. The microphone 108 converts sound into audio data (signals).

The audio processor 109 obtains the audio data from the microphone 108 through an I/F bus and performs predetermined processing on the audio data.

The CPU 111 controls the entire operation of the image capturing device 10 and executes predetermined processing.

The ROM 112 stores various programs for execution by the CPU 111. Each of the SRAM 113 and the DRAM 114 operates as a working memory to store programs to be executed by the CPU 111 or data currently processed. More specifically, in one example, the DRAM 114 stores image data currently processed by the image processor 104 and equirectangular projection image data on which processing has been performed.

The operation unit 115 collectively refers to various operation buttons, a power switch, a shutter button, and a touch panel that functions both as a display for information and as an input device, and can be used in combination. The operation unit 115 allows the user operating the operation unit 115 to input various image capturing (image capturing) modes or image capturing (image capturing) conditions.

The input/output I/F 116 collectively refers to an interface circuit, such as a universal serial bus (USB) I/F, for an external medium such as a secure digital (SD) card or a personal computer. The input/output I/F 116 supports at least one of wired and wireless communications. The equirectangular projection image data stored in the DRAM 114 can be stored in an external medium via the input/output I/F 116 or transmitted to an external terminal (apparatus) via the input/output I/F 116, as appropriate.

The short-range communication circuit 117 communicates with an external terminal (apparatus) via the antenna 117a of the image capturing device 10 by short-range wireless communication such as near field communication (NFC), BLUETOOTH (registered trademark), and Wi-Fi. The short-range communication circuit 117 transmits the equirectangular projection image data to the external terminal (apparatus).

The electronic compass 118 calculates the orientation of the image capturing device 10 from the Earth's magnetism to output orientation information. The orientation information is an example of related information that is metadata described in compliance with Exif and is used for image processing such as image correction of captured images. The related information also includes an imaging date and time, that indicates the date and time when the image is captured, and a data size of the image data.

The gyro sensor 119 detects the change in tilt of the image capturing device 10 (roll, pitch, yaw) with the movement of the image capturing device 10. The change in tilt is one example of the related information (metadata) described in compliance with Exif, and used for image processing such as image correction performed on a captured image.

The acceleration sensor 120 detects acceleration in three axial directions.

The image capturing device 10 can also calculate the attitude (tilt with respect to the direction of gravity) of the own device (image capturing device 10) using, for example, the electronic compass 118 and the acceleration sensor 120. Further, the image capturing device 10 increases the accuracy of image correction by the acceleration sensor 120.

The network I/F 121 is an interface for data communication via such as a router using the communication network 100 such as the Internet. The hardware configuration of the image capturing device 10 is not limited to the above, and may be any configuration as long as the functional configuration of the image capturing device 10 can be implemented. At least a part of the hardware configuration may be implemented by the relay device 3 or the communication network 100.

## Hardware Configuration of Relay Device

FIG. 11 is a block diagram illustrating a hardware configuration of the relay device 3. The relay device 3 having the hardware configuration illustrated in FIG. 11 has a cradle with a wireless communication function.

As illustrated in FIG. 11, the relay device 3 includes a CPU 301, ROM 302, RAM 303, electrically erasable and programmable ROM (EEPROM) 304, a CMOS sensor 305, a bus line 310, a communication device 313, an antenna 313a, a positioning device 314, and an input/output I/F 316.

The CPU 301 controls the entire operation of the relay device 3. The ROM 302 stores a control program such as an initial program loader (IPL) used for operating the CPU 301. The RAM 303 is used as a working area for the CPU 301.

The EEPROM 304 reads or writes under the control of the CPU 301. The EEPROM 304 stores an operating system (OS) and other programs executed by the CPU 301, and various data.

The CMOS sensor 305 is a solid-state imaging element that images a subject under the control of the CPU 301 and obtains image data.

The communication device 313 communicates with the communication network 100 by a wireless communication signal using the antenna 313a.

The positioning device 314 receives a positioning signal including position information (latitude, longitude, and altitude) of the relay device 3 using a global navigation satellite system (GNSS) satellite such as a global positioning system (GPS) satellite or using an indoor MEssaging system (IMES) as an indoor GPS.

The input/output I/F 316 is an interface circuit, such as a USB I/F, electrically connected to the input/output I/F 116 of the image capturing device 10. The input/output I/F 316 supports at least one of wired and wireless communications.

The bus line 310 includes an address bus and a data bus. The bus line 310 electrically connects the components, such as the CPU 301, with each other.

Hardware Configuration of Communication Control Device/Communication Terminal

FIG. 12 is a block diagram illustrating a hardware configuration of each of the communication control apparatus 5, the communication terminal 7, and the communication terminal 9. The hardware configuration of each of the communication terminals 7 and 9 is the same as that of the communication control apparatus 5, and thus the description thereof is omitted.

As illustrated in FIG. 12, the communication control apparatus 5 includes, as a computer, a CPU 501, a ROM 502, a RAM 503, a solid-state drive (SSD) 504, an external device connection I/F 505, a network I/F 506, a display 507, an operation device 508, a medium I/F 509, a bus line 510, a CMOS sensor 511, a speaker 512, a microphone 513 and a positioning device 514.

The CPU 501 controls the entire operation of the communication control apparatus 5. The ROM 502 stores programs used for driving the CPU 501, such as an IPL. The RAM 503 is used as a working area for the CPU 501.

The SSD 504 reads or writes various data under the control of the CPU 501. When being, for example, a smartphone, each of the communication terminals 7 and 9 may not include the SSD 504. A hard disk drive (HDD) may be used instead of the SSD 504.

The external device connection I/F 505 is an interface that connects to various external devices (apparatuses). Examples of such external devices include a display, a speaker, a keyboard, a mouse, a universal serial bus (USB) memory, and a printer.

The network I/F 506 is an interface for data communication via the communication network 100.

The display 507 is a display unit such as a liquid crystal display (LCD) or an organic electroluminescence (EL) display that displays various images.

The operation device 508 is an input unit such as various operation buttons, a power switch, a shutter button, and a touch panel for operations including selecting or executing various instructions, selecting a processing target, and moving a cursor.

The medium I/F 509 controls reading and writing (storing) data from or to a recording medium 509m such as a flash memory. Examples of the recording medium 509m include a digital versatile disc (DVD) and a BLU-RAY DISC.

The CMOS sensor 511 is a built-in imaging unit that captures a subject under the control of the CPU 501 and obtains image data. A CCD sensor may be used instead of the CMOS sensor.

The speaker 512 is a circuit that generates sound such as music or voice by converting an electrical signal into physical vibration. The microphone 513 is a circuit that converts collected (captured) sound into audio data (signals).

The positioning device 314 receives a positioning signal including position information (latitude, longitude, and altitude) of each of the communication terminals 7 and 9 using a GNSS satellite such as a GPS satellite or using an IMES as an indoor GPS.

The bus line 510 includes an address bus and a data bus. The bus line 510 electrically connects the components, such as the CPU 501, with each other.

## Functional Configuration

A functional configuration of the communication system 1 is described below with reference to FIGS. 13 to 16.

### Functional Configuration of Image Capturing Device

As illustrated in FIG. 13, the image capturing device 10 includes a reception unit 12, a detection unit 13, an imaging unit 16, a sound collection unit 17, a connection unit 18, and a storing/reading unit 19. Each of the above-mentioned units is a function or a means that is implemented by operating any one or more of the components illustrated in FIG. 10 according to instructions from the CPU 111 executing a program for an image capturing device after the program is loaded from the SRAM 113 to the DRAM 114.

The image capturing device 10 further includes a storage unit 1000 that is implemented by at least one of the ROM 112, the SRAM 113, and the DRAM 114 illustrated in FIG. 9.

Functional Units of Image Capturing Device

The reception unit 12 of the image capturing device 10 is implemented by processing of the operation unit 115 for the CPU 111 and receives an operation input from the user.

The detection unit 13 is implemented by, for example, processing of the CPU 111 for a component such as the electronic compass 118, the gyro sensor 119, or the acceleration sensor 120 and obtains attitude information by detecting the attitude of the image capturing device 10.

The imaging unit 16 is implemented by, for example, processing of the CPU 111 for the imaging unit 101, the image processor 104, or the imaging controller 105 and images, for example, scenery to obtain a captured image.

The sound collection unit 17 is implemented by, for example, processing of the CPU 111 for the audio processor 109 and collects sound around the image capturing device 10.

The connection unit 18 is implemented by, for example, processing of the CPU 111 for the input/ output I/F 116 and establishes communication with the relay device 3.

The storing/reading unit 19 is implemented by, for example, processing of the CPU 111 and stores various data (or information) in the storage unit 1000 or reads various data (or information) from the storage unit 1000.

Functional Configuration of Relay Device

As illustrated in FIG. 13, the relay device 3 includes a communication unit 31 and a connection unit 38. Each of the above-mentioned units is a function or a means that is implemented by operating any one or more of the components illustrated in FIG. 11 according to instructions from the CPU 301 executing a program for the relay device 3 after the program is loaded from the EEPROM 304 to the RAM 303.

Functional Configuration of Relay Device 3

The communication unit 31 of the relay device 3 is implemented by, for example, processing of the CPU 301 for the communication device 313 illustrated in FIG. 11 and establishes data communication with the image capturing device 10 and the communication control apparatus 5 via the communication network 100.

The connection unit 38 is implemented by, for example, processing of the CPU 301 for the input/output I/F 316 and establishes data communication with the image capturing device 10.

Functional Configuration of Communication Control Apparatus

A functional configuration of the communication control apparatus 5 is described below in detail with reference to FIG. 13. The communication control apparatus 5 includes a communication unit 51, a reception unit 52, a generation unit 53, a processing unit 54, an authentication unit 55, and a storing/reading unit 59. Each of the above-mentioned units is a function or a means that is implemented by operating any one or more of the components illustrated in FIG. 12 according to instructions from the CPU 501 executing a program for the communication control device 5 after the program is loaded from the SSD 504 to the RAM 503.

The communication control apparatus 5 further includes a storage unit 5000 that is implemented by at least one of the RAM 503 and the SSD 504 illustrated in FIG. 12. The storage unit 5000 includes a user device management database (DB) 5001, a virtual room management DB 5002, and a three-dimensional image management DB 5003.

User Device Management DB

FIG. 14 is a schematic diagram of a user device management table. The user device management DB 5001 includes a user device management table illustrated in FIG. 14. In the user device management table, data items of user identifier (ID) (or device ID), password, name, user image, and internet protocol (IP) address are managed in association with each other.

The user ID is an example of user identification information for identifying a user, such as the organizer X, the participant A, or the participant B. The device ID is an example of device identification information for identifying a device such as the image capturing device 10. When a head mounted display or a similar device is used in addition to the image capturing device 10, the head mounted display or the similar device is also regarded as a device.

The name is the name of the user or the device. A user name may be the name of the communication terminal used by the user.

The user image is, for example, an image obtained by schematically modeling the face of the user, an image of a photograph of the face of the user. The user image is preregistered by the user.

The IP address is an example of destination identifying information of the device such as the communication terminal 7, communication terminal 9, or the image capturing device 10 used by the user.

Virtual Room Management DB

FIG. 15 is a schematic diagram of a virtual room management table. The virtual room management DB 5002 includes a virtual room management table illustrated in FIG. 15. In the virtual room management table, data items of virtual room ID, virtual room name, device ID, host ID, participant ID, content ID, content uniform resource locator (URL) (storage location information of content data including image data and sound data), field-of-view information URL (storage location information of field-of-view information), and three-dimensional image ID are managed in association with each other.

The virtual room ID is an example of virtual room identification information for identifying a virtual room.

The virtual room name is the name of the virtual room and is assigned by, for example, the user.

The device ID is the same as the device ID in FIG. 14 and is the ID of a device that has joined the virtual room indicated by the virtual room ID in the same record.

The organizer ID is an example of organizer identification information for identifying the organizer ID among the user IDs in FIG. 14 and is an ID of the organizer who participates in the virtual room indicated by the virtual room ID in the same record.

The participant ID is an example of participant identification information for identifying a participant ID among the user IDs in FIG. 14 and is an ID of a participant who participates in a virtual room indicated by the virtual room ID in the same record.

The content ID is an example of content identification information for identifying content data including image data and sound data. The image in this case is a wide-field image obtained at the time of imaging, and the sound including voice is obtained at the same time of imaging.

The content URL is an example of content storage location information indicating a location where content (wide-field image, sound information) data is stored (see Step S54). The content URL is stored in association with the content data, the timestamp indicating the start time and end time of imaging (image recording) and sound capturing (sound recording), and the image capturing position (absolute position on the earth).

The field-of-view information URL is an example of field-of-view information storage location information indicating a storage location of field-of-view information indicating a field of view for a predetermined-area image displayed by a user (for example, the organizer X or the participant A or B) during recording (see Steps S37 to S39).

The three-dimensional image ID is an example of three-dimensional image identification information for identifying a three-dimensional image to be displayed in a display area 620, which is described later.

Three-dimensional Image Management DB

FIG. 16A is a schematic diagram of a three-dimensional image management table. The three-dimensional image management DB 5003 includes the three-dimensional image management table illustrated in FIG. 16A. In the three-dimensional image management table illustrated in 16A, data items of model ID and position information are managed in association with each other for each three-dimensional image ID.

The model ID is an example of three-dimensional model identification information for identifying a three-dimensional model. The three-dimensional model is generated based on a point cloud acquired by, for example, a time-of-flight (TOF) camera.

The position information is information indicating the position of the three-dimensional model in a three-dimensional virtual space by three-dimensional coordinates of XYZ. The position information is indicated by, for example, the three-dimensional coordinates of eight points defining a rectangular parallelepiped space occupied by the three-dimensional model.

FIG. 16B is a schematic diagram of another three-dimensional image management table. The three-dimensional image management DB 5003 includes the three-dimensional image management table illustrated in FIG. 16B. The three-dimensional image management table illustrated in FIG. 16B is a table for managing attribute information indicating attributes of components (three-dimensional models) constituting a structure included in a three-dimensional virtual space. In the three-dimensional image management table illustrated in FIG. 16B, as attribute information, component NO., component information, dimension information, color information, material information, position information, and construction date information are managed in association with each other for each three-dimensional image ID.

The component information is information for identifying a component such as a wall, a floor, a ceiling, a window, a pipe, or a door.

The dimension information is information for identifying the dimension of a component in the virtual space and is indicated by, for example, numerical values in three-axis directions of XYZ.

The color information is information for identifying the color of a component, and the material information is information for identifying the material of a component.

The position information is information for identifying the position of a component in the virtual space and is indicated by, for example, coordinates in three-axis directions of XYZ. With the position information, whether multiple components are adjacent to each other can be determined.

The construction date information is information indicating a scheduled date on which the component is to be constructed in the real world. With the construction date information, a structure excluding an unconstructed component at a certain point in time can be identified.

As described above, the position information in FIG. 16A and the position information in FIG. 16B are managed in association with the absolute position on the earth including indoor spaces. For example, by associating the origin (X = 0, Y = 0, Z = 0) of the position information in FIGS. 16A and 16B with the absolute position (latitudes, longitudes, altitudes) on the earth, all coordinates in the three-dimensional image including the three-dimensional model, and the components are associated with the absolute position on the earth.

The three-dimensional image management DB 5003 may manage, for example, a three-dimensional point cloud, a mesh object, and a textured mesh object, instead of the three-dimensional model.

Functional Units of Communication Control Apparatus

The functional units of the communication control apparatus 5 are described below in detail with reference to FIG. 13.

The communication unit 51 of the communication control apparatus 5 is implemented by, for example, processing of the CPU 501 for the network I/F 506 illustrated in FIG. 11 and establishes data communication with other devices (the relay device 3, the communication terminals 7 and 9) via the communication network 100. The communication unit 51 is also an example of an acquisition unit and acquires instruction information indicating an instruction transmitted from the communication terminals 7 and 9.

The reception unit 52 is implemented by processing of the CPU 501 for the operation device 508 and receives an operation input from the user (for example, a system administrator).

The generation unit 53 is implemented by, for example, processing of the CPU 501 and generates, using data stored in the storage unit 5000, a screen to be transmitted to each of the communication terminals 7 and 9. For example, the generation unit 53 creates a screen 600 including a display area 610 for displaying a predetermined-area image that is a predetermined area in a wide-field image (an example of a captured image) captured by the image capturing device 10 and a display area 620 for displaying at least a part of a three-dimensional image including a second position (coordinates) associated with (corresponding to) a first position (coordinates) in the wide-field image are associated with each other by the processing unit 54 (see FIG. 25).

The processing unit 54 is implemented by, for example, processing of the CPU 501 and associates position information (an example of first position information) indicating a position (an example of a first position) in a captured image obtained by imaging a target object by the image capturing device 10 with position information (an example of second position information) indicating another position (an example of a second position) in a three-dimensional image including a three-dimensional area corresponding to the target object. The processing unit 54 may be referred to as an "association unit."

The authentication unit 55 is implemented by, for example, processing of the CPU 501 and authenticates, for example, whether the user has the authority to use the virtual room.

The storing/reading unit 59 is implemented by, for example, processing of the CPU 501 and stores various data (or information) in the storage unit 5000 or reads various data (or information) from the storage unit 5000.

Functional Configuration of Communication Terminal 7

The functional configuration of the communication terminal 7 is described below in detail with reference to FIG. 13. The communication terminal 7 includes a communication unit 71, a reception unit 72, a generation unit 73, a display control unit 74, a sound input/output control unit 75, a connection unit 78, and a storing/reading unit 79. Each of the above-mentioned units is a function or a means that is implemented by operating any one or more of the components illustrated in FIG. 12 according to instructions from the CPU 501 executing a program for the communication terminal 7 after the program is loaded from the SSD 504 to the RAM 503.

The communication unit 71 of the communication terminal 7 is implemented by, for example, processing of the CPU 501 for the network I/F 506 illustrated in FIG. 11 and establishes data communication with other devices (the communication control apparatus 5) via the communication network 100.

The reception unit 72 is implemented by, for example, processing of the CPU 501 for the operation device 508 and receives an instruction by an operation input from the user, such as the organizer X. The reception unit 72 is also an example of an acquisition unit and acquires an instruction given according to a user operation.

The generation unit 73 is implemented by, for example, processing of the CPU 501 and generates, using data stored in the storage unit 7000, a screen to be displayed on the own terminal (in this example, communication terminal 7). In a case where the generation unit 53 of the communication control apparatus 5 generates a screen, the communication terminal 7 may or may not include the generation unit 73.

The display control unit 74 is implemented by, for example, processing of the CPU 501 and causes the display 507 of the communication terminal 7 or an external display connected to the external device connection I/F 505 to display various images.

The sound input/output control unit 75 is implemented by, for example, processing of the CPU 501 of the communication terminal 7 and causes the speaker 512 or an external speaker connected to the external device connection I/F 505 to output sound. The sound input/output control unit 75 further causes the microphone 513 and an external microphone connected to the external device connection I/F 505 to collect sound.

The connection unit 78 is implemented by, for example, processing of the CPU 501 for the external device connection I/F 505 and establishes data communication with the connection unit 18 of the image capturing device 10 when the communication terminal 7 also includes the function of the relay device 3.

The storing/reading unit 79 is implemented by, for example, processing of the CPU 501 and stores various data (or information) in the storage unit 7000 or reads various data (or information) from the storage unit 7000.

Functional Configuration of Communication Terminal 9

The functional configuration of the communication terminal 9 is described below in detail with reference to FIG. 13.

The communication terminal 9 includes a communication unit 91, a reception unit 92, a generation unit 93, a display control unit 94, a sound input/output control unit 95, a connection unit 98, and a storing/reading unit 99. Each of the above-mentioned units is a function or a means that is implemented by operating any one or more of the components illustrated in FIG. 12 according to instructions from the CPU 501 executing a program for the communication terminal 9 after the program is loaded from the SSD 504 to the RAM 503.

The communication terminal 9 further includes a storage unit 9000 that is implemented by the RAM and the SSD 504 illustrated in FIG. 12.

The communication unit 91 of the communication terminal 9 is implemented by, for example, processing of the CPU 501 for the network I/F 506 and establishes data communication with other devices (the communication control apparatus 5) via the communication network 100.

The reception unit 92 is implemented by, for example, processing of the CPU 501 for the operation device 508 and receives an instruction by an operation input from the user, such as a participant. The reception unit 92 is also an example of an acquisition unit and acquires an instruction given according to a user operation.

The generation unit 93 is implemented by, for example, processing of the CPU 501 and generates, using data stored in the storage unit 9000, a screen to be displayed on the own terminal (communication terminal 9). In a case where the generation unit 53 of the communication control apparatus 5 generates a screen, the communication terminal 9 may or may not include the generation unit 93.

The display control unit 94 is implemented by, for example, processing of the CPU 501 and causes the display 507 of the communication terminal 9 or an external display connected to the external device connection I/F 505 to display various images.

The sound input/output control unit 95 is implemented by, for example, processing of the CPU 501 of the communication terminal 9 and causes the speaker 512 or an external speaker connected to the external device connection I/F 505 to output sound. The sound input/output control unit 95 further causes the microphone 513 and an external microphone connected to the external device connection I/F 505 to collect sound.

The connection unit 98 is implemented by, for example, processing of the CPU 501 for the external device connecting I/F 505 of the communication terminal 9 and establishes data communication with an external device connected by wire or wirelessly.

The storing/reading unit 99 is implemented by, for example, processing of the CPU 501 and stores various data (or information) in the storage unit 9000 or reads various data (or information) from the storage unit 9000.

Processes/Operations

Processes or operations according to the present embodiment are described below with reference to FIG. 17 to FIG. 32. The processes described below processes after the image capturing device 10 and the communication terminals 7 and 9 have already participated in the same virtual room.

Process for Transmitting Content Data in Communication System

A process for transmitting content data in the communication system 1 is described with reference to FIG. 17. FIG. 17 is a sequence diagram illustrating a communication process in relation to content data in the communication system 1. In the following description of the process, the image capturing device 10, the communication terminal 7 used by the organizer X, the communication terminal 9a used by the participant A, and the communication terminal 9b used by the participant B are in the same virtual room. The storing/reading unit 79 adds one record corresponding to the virtual room that is set up to the virtual room management DB 5002 (see FIG. 15), and the virtual room ID, the virtual room name, the device ID, the organizer ID, and the participant ID are managed in association with each other as the record. The content ID, the content URL, and the field-of-view information URL are stored later. The processing of Steps S11 to S15 of FIG. 17 is repeatedly performed, for example, about 30 times or 60 times per second.

Step S11: The image capturing device 10 acquires content (wide-field image and sound information) data by performing sphere imaging at (within) the site Sa and capturing sound by the imaging unit 16, and then, transmits the content data to the relay device 3 by the connection unit 18. In this case, the connection unit 18 also transmits the virtual room ID for identifying the virtual room in which the image capturing device 10 participates and the device ID for identifying the image capturing device 10. Further, the image capturing device 10 transmits information on an image capturing position that is a position (absolute position) of the image capturing device 10 to the relay device 3 at predetermined time intervals (for example, every second). Accordingly, the relay device 3 acquires the content data, the virtual room ID, the device ID, and the information on the image capturing position by the connection unit 38. The image capturing position is a position obtained by the positioning device 314, that is, an absolute position on the earth.

Step S12: The relay device 3 transmits to the communication control apparatus 5 via the communication network 100 the content data, the virtual room ID, the device ID, and the image capturing position received by the connection unit 38 in Step S11, by the communication unit 31. Accordingly, the communication control apparatus 5 receives the content data, the virtual room, the device ID, and the image capturing position by the communication unit 51. The communication control apparatus 5 stores the content data (including the information on the image capturing position) received in Step S12 in the content URL corresponding to the virtual room ID received in Step S12 in the virtual room management DB 5002 (see FIG. 15).

The image capturing device 10 may transmit the content data, the virtual room ID, the device ID, and the image capturing position to the communication terminal 7 without transmitting to the relay device 3 (Step S11d). In this case, the communication terminal 7 transmits the content data, the virtual room ID, the device ID, and the image capturing position to the communication control apparatus 5 (Step S12d).

Step S13: The communication control apparatus 5 searches the virtual room management DB 5002 based on the virtual room ID received in Step S12 to read the user IDs (the organizer ID and the participant IDs) of the users who participate in the same virtual room as the image capturing device 10, by the storing/reading unit 59. The storing/reading unit 59 also searches the user device management DB 5001 based on the read organizer ID and participant IDs to read the corresponding user images of the organizer X and the participants A and B and the corresponding IP addresses of the communication terminal 7, the communication terminal 9a, and the communication terminal 9b. The communication unit 51 refers to the IP address of the communication terminal 7 and communicates bidirectionally with the communication terminal 7. This bidirectional communication is described later.

Step S14: The communication control apparatus 5 refers to the IP address of the communication terminals 9a and communicates bidirectionally with the communication terminal 9a, by the communication unit 51. This bidirectional communication is described later.

Step S15: Similarly, the communication control apparatus 5 refers to the IP address of the communication terminals 9b and communicates bidirectionally with the communication terminal 9b, by the communication unit 51. This bidirectional communication is described later.

Process for Starting Image Recording and Sound Recording in Communication System

A process for starting image recording and sound recording in the communication system 1 is described below with reference to FIG. 18. FIG. 18 is a sequence diagram illustrating a process for starting image recording and sound recording in the communication system 1.

Step S31: The communication terminal 7 receives an operation to start image recording and sound recording from the organizer X by the reception unit 72.

Step S32: Before starting image recording and sound recording, the communication terminal 7 transmits an instruction to share field-of-view information (sharing instruction) to the communication control apparatus 5 by the communication unit 71. The sharing instruction includes the virtual room ID of the virtual room in which the communication terminal 7 participates and the device ID of the image capturing device 10. Accordingly, the communication control apparatus 5 receives the sharing instruction to share the field-of-view information by the communication unit 51.

Step S33: The communication control apparatus 5 sets the content URL and the field-of-view information URL in the virtual room management DB 5002 (see FIG. 15) by the storing/reading unit 59. Then, the communication unit 51 transmits an instruction to start recording and a request to upload field-of-view information to the communication terminal 7. The instruction includes information indicating a content URL indicating a location where the communication terminal 7 stores the content data after recording. The request includes information indicating a field-of-view information URL for retaining the field-of-view information. Accordingly, the communication terminal 7 receives the instruction to start recording and the request to upload field-of-view information by the communication unit 71.

Step S34: The communication unit 51 transmits a request to upload field-of-view information to the communication terminal 9a. The request includes information on a URL for retaining field-of-view information. Accordingly, the communication terminal 9a receives the request to upload field-of-view information by the communication unit 91.

Step S35: Similarly, the communication unit 51 transmits a request to upload field-of-view information to the communication terminal 9b. The request includes information on a URL for retaining field-of-view information. Accordingly, the communication terminal 9b receives the request to upload field-of-view information by the communication unit 91.

Step S36: Subsequently, the communication terminal 7 starts recording the content data received in Step S13 of FIG. 17, by the storing/reading unit 79 that is an example of a recording unit for image recording and sound recording. In the case of Step S12d of FIG. 17, the communication terminal 7 may start image recording and sound recording of the content data received from the image capturing device 10 in Step S11d, instead of the content data received from the communication control apparatus 5 in Step S13.

Step S37: When receiving, by the reception unit 72, an operation for changing a field of view by the organizer X, while displaying, for example, the predetermined-area image (see FIG. 6B) corresponding to the predetermined area (see FIG. 6A) of the wide-field image received in Step S13, the communication terminal 7 displays, by the display control unit 74, the predetermined-area image (see FIG. 6D) corresponding to the predetermined area (see FIG. 6C) that is changed from the previous predetermined area (see FIG. 6A) in the same wide-field image. In this case, the reception unit 72 is an example of an acquisition unit and acquires the field-of-view information (pan, tilt, fov) for specifying the predetermined area to be displayed on the display 507 in the wide-field image when an operation for displaying the predetermined area in the wide-field image is received from the user, such as the organizer X. Then, the communication unit 71 transmits the field-of-view information for specifying the changed predetermined area to the field-of-view information URL (communication control apparatus 5) received in Step S33. The field-of-view information includes the user ID of the organizer X who uses the communication terminal 7 that is the transmission source. Accordingly, the communication control apparatus 5 receives the field-of-view information by the communication unit 51. Then, the storing/reading unit 79 stores the user ID of the organizer X, the field-of-view information, and the receiving date and time of the information for the field-of-view URL stored in the virtual room management DB 5002 (see FIG. 15). The receiving date and time in this case is the date and time when the reception unit 72 of the communication terminal 7 receives a user operation, performed by the organizer X, for changing the field of view.

Step S38: Processing that is substantially the same as the processing of Step S37 is also performed between the communication terminal 9a and the communication control apparatus 5 independently of the processing of Step S37. The user ID transmitted in this case is the user ID of the participant A. The receiving date and time in this case is the date and time when the reception unit 92 of the communication terminal 9a receives a user operation, performed by the participant A, for changing the field of view.

Step S39: Processing that is substantially the same as the processing of Step S37 or the processing of Step S38 is also performed between the communication terminal 9b and the communication control apparatus 5 independently of the processing of Step S37 and the processing of Step S38. The user ID transmitted in this case is the user ID of the participant B. The receiving date and time in this case is the date and time when the reception unit 92 of the communication terminal 9b receives a user operation, performed by the participant B, for changing the field of view.

Accordingly, when the predetermined-area image is changed, for example from FIG. 6B to FIG. 6D, in the communication terminal 7, the communication control apparatus 5 can manage the predetermined-area to which the organizer X pays attention by viewing the predetermined-area image illustrated in FIG. 6D. Similarly, the communication control apparatus 5 can manage the predetermined area that is viewed and paid attention by the participant A with the communication terminal 9a and the predetermined area that is viewed and paid attention by the participant B and with the communication terminal 9b. The processing of Step S37 to Step S39 may be collectively executed on the communication control apparatus 5 at the end of the recording.

Process for Stopping Image Recording and Sound Recording in Communication System

A process for stopping image recording and sound recording in the communication system 1 is described below with reference to FIG. 19. FIG. 19 is a sequence diagram illustrating a process for stopping image recording and sound recording in the communication system 1.

Step S51: The communication terminal 7 receives an operation for stopping image recording and sound recording from the organizer X by the reception unit 72.

Step S52: The storing/reading unit 79 stops image recording and sound recording.

Step S53: The communication unit 71 uploads (transmits) the recorded content to a predetermined content URL (communication control apparatus 5) received in Step S33. The content data includes the times (timestamps) each indicating the star time and the end time of the recording. Accordingly, the communication control apparatus 5 receives the content data by the communication unit 51.

Step S54: The communication control apparatus 5 stores the content data along with the timestamp in the predetermined content URL by the storing/reading unit 59. Further, the storing/reading unit 59 converts the timestamps into an elapsed playback time in accordance with the total recording time of the content data of which the recording is stopped, and stores the timestamps and the elapsed playback time in association with each other.

Step S55: The communication unit 51 transmits a notification of the end of the image recording and sound recording (end notification) to the communication terminal 7. The end notification includes information indicating a predetermined content URL. Accordingly, the communication terminal 7 receives the notification of the end of the image recording and sound recording by the communication unit 71.

Step S56: Similarly, the communication unit 51 transmits a notification of the end of the image recording and sound recording (end notification) to the communication terminal 9a. The end notification includes information indicating a predetermined content URL. Accordingly, the communication terminal 9a receives the notification of the end of the image recording and sound recording by the communication unit 91.

Step S57: Similarly, the communication unit 51 transmits a notification of the end of the image recording and sound recording (end notification) to the communication terminal 9b. The end notification includes information indicating a predetermined content URL. Accordingly, the communication terminal 9b receives the notification of the end of the image recording and sound recording by the communication unit 91.

In the case of the processing of Step S55, the end notification may not include a predetermined content URL.

Process for Playback of Recorded Image and Recorded Sound in Communication System

A process for playback of a recorded image and recorded sound in the communication system 1 is described below with reference to FIGS. 20 to 26. FIG. 20 is a sequence diagram illustrating a process for playback of a recorded image and recorded sound in the communication system 1. FIG. 21 is a diagram illustrating a recorded data selection screen. In this example, the participant A uses the communication terminal 9a to play recorded content data. The organizer X may play recorded content data using the communication terminal 7, or the participant B may play recorded content data using the communication terminal 9b.

Step S71: When receiving a login operation of inputting, for example, a user ID (the participant ID of the participant A) and a password from the participant A by the reception unit 92, the communication terminal 9a transmits a login request to the communication control apparatus 5 by the communication unit 91. The request includes the user ID and password of the participant A. The communication control apparatus 5 receives, by the communication unit 51, the login request and performs authentication, by the authentication unit 55, by referring to the user device management DB 5001 (see FIG. 14). The following description is given on the assumption that the participant A is determined to be a valid accessor by the login authentication.

Step S72: The communication control apparatus 5 generates a recorded data selection screen 940 as illustrated in FIG. 21, the generation unit 53. In this case, the storing/reading unit 59 searches the virtual room management DB 5002 (see FIG. 15) using the user ID (in the example, the participant ID of the participant A) received in Step S71 as a search key and reads all the corresponding virtual room IDs, virtual room names, and content URLs. Then, the generation unit 53 generates thumbnails 941, 942, and 943 using an image of the corresponding content data (with a timestamp) stored in the content URL. Thus, the generation unit 53 adds a virtual room name, such as a "construction site $\alpha$," and a recording time, such as "2022/10/31 15:00" indicating a predetermined time (for example, a recording start time) of a timestamp for each thumbnail.

Step S73: The communication unit 51 transmits the selection screen generated in Step S72 to the communication terminal 9a. The selection screen data includes content IDs each of which identifies a wide-field image used as the source for a corresponding thumbnail. The communication terminal 9a receives the selection screen data by the communication unit 91.

Step S74: The communication terminal 9a displays the recorded data selection screen 940 as illustrated in FIG. 21 on the display 507 of the communication terminal 9a by the display control unit 94. Then, the reception unit 92 receives an operation for specifying (selection of) a predetermined thumbnail from the participant A. The following description is given on the assumption that the thumbnail 941 is specified (selected).

Step S75: The communication unit 71 transmits a request to download the content data used as the source for the selected thumbnail 941 to the communication control apparatus 5. This request includes the content ID associated with the thumbnail 941. Accordingly, the communication control apparatus 5 receives the request to download the content data by the communication unit 51.

Step S76: The communication control apparatus 5 searches the virtual room management DB 5002 (see FIG. 15) using the content ID received in Step S75 as a search key by the storing/reading unit 59. The content data also includes position information where the image capturing device 10 performs imaging. The storing/reading unit 59 searches the three-dimensional image management DB 5003 (see FIG. 16A or FIG. 16B) using the three-dimensional image ID associated with the content ID received in Step S75 in the virtual room management DB 5002 as a search key and reads, for example, the model IDs and the parameters of the position information (see FIG. 16A), or the component numbers and the parameters of the position information (see FIG. 16B) associated with the three-dimensional ID.

The communication unit 51 transmits the three-dimensional image data along with the requested content data to the communication terminal 9a. Accordingly, the communication terminal 9a receives the content data and the three-dimensional image data by the communication unit 91.

Step S77: The communication terminal 9a performs a playback process. That is, the communication terminal 9a displays a screen including an image that is recorded by the processing of Step 36 on the display 507 of the communication terminal 9a by the display control unit 94 and outputs sound by the sound input/output control unit 95.

## Details of Screen Display Process

From the processing of Step S13, the processing of Step 14, and the processing of Step S15, the processing of Step S14 is described below with reference to FIGS. 22 to 32. When the participant A operates the communication terminal 9a, the reception unit 92 receives the operation, and the communication unit 91 transmits operation information indicating operation content to the communication control apparatus 5. Accordingly, in the communication control apparatus 5, the communication unit 51 that is an example of an acquisition unit acquires the operation information, and the generation unit 53 generates a screen 600 based on the operation content indicated by the operation information. Then, the communication unit 51 transmits data on the screen 600 to the communication terminal 9a, and the communication unit 91 of the communication terminal 9a receives the data on the screen 600. Then, the display control unit 94 displays the screen 600 on, for example, the display 507 of the communication terminal 9a. In this case, the communication control apparatus 5 is an example of an information processing apparatus.

The communication unit 91 of the communication terminal 9a may receive data for generating the screen 600 from the communication control apparatus 5, and the reception unit 92 that is an example of an acquisition unit may acquire operation information indicating the content of an operation performed by the participant A. In this case, the generation unit 93 of the communication terminal 9a generates the screen 600. In this case, the communication terminal 9a is an example of an information processing apparatus. Each of the communication terminals 7 and 9b can perform substantially the same process and have substantially the same functions as the communication terminal 9a.

A process for generating the screen 600 to be displayed on the display 507 of the communication terminal 9a, performed by the communication control apparatus 5 is described below. In the processing of Step S13, the processing of Step S15, and the processing of Step S14, the operation of the communication control apparatus 5 is the same, but the terminals to display a screen differ. Thus, the description of the processing of Step S13 and the processing of Step S15 are omitted. FIGS. 22 to 24 are flowcharts illustrating the operation of the communication control apparatus in a screen display process.

The generation unit 53 of the communication control apparatus 5 generates the screen 600 to be displayed by the communication terminal 9a as illustrated in FIG. 25. FIG. 25 is a diagram illustrating an example of an initial display screen displayed on the communication terminal 9a. The screen 600 includes a display area 610 (an example of a first display area) and a display area 620 (an example of a second display area). In FIG. 25, the display area 610 and the display area 620 are displayed simultaneously in the same size on the screen 600, but may be displayed simultaneously in different sizes, or one of the display area 610 and the display area 620 may be displayed by switching by the selection of the participant A. Alternatively, the display area 610 of the screen 600 may be displayed on one of two displays prepared by the participant A, and the display area 620 of the screen 600 may be displayed on the other one of the two displays.

The display area 610 displays a predetermined-area image (see FIG. 6B) that is a predetermined area in a wide-field image (an example of a captured image) (see FIG. 6A) obtained by the image capturing device 10 at the site Sa capturing an image of a target object such as a desk, a pillar, or a window.

When the captured image is not a curved image such as a wide-field image, the display area 610 displays as a predetermined-area image by defining the same area as the imaging area of the captured image as the predetermined area.

The display area 620 displays a part or all of a three-dimensional image that includes a three-dimensional model representing the shape of a target object in three dimensions. The three-dimensional image includes the coordinates (an example of the second coordinates) corresponding to the coordinates indicating the position of the target object in the wide-field image (an example of the first coordinates). In this case, the display area 620 displays the part or all of the three-dimensional image.

As described with reference to FIG. 11, the image capturing position that is the position of the image capturing device 10 is associated with the absolute position on the earth, and as described with reference to FIGS. 16A and 16B, all coordinates in the three-dimensional image including the three-dimensional models and components managed in the three-dimensional image management DB 5003 are also associated with the absolute position on the earth.

Thus, as the alignment processing performed on between the wide-field image and the three-dimensional image, the processing unit 54 associates, for example, coordinates (an example of the first coordinates) indicating the image capturing position as a first position in the wide-field image of the content data received by the communication control apparatus 5 in Step S12 (or Step S12d) with coordinates (an example of the second coordinates) indicating a second position in the three-dimensional image having the same absolute position as the coordinates. The coordinates are an example of position information.

As another form of alignment processing, the processing unit 54 may associate the coordinates indicating the first position in the wide-field image with the coordinates indicating the second position in the three-dimensional image by image processing such as matching features of the edges or texture of the wide-field image and the three-dimensional image, without using the absolute position on the earth (including indoor spaces) or in order to complement the absolute position.

Then, as described above, the generation unit 53 generates the screen 600 including the display area 610 for displaying the predetermined-area image that is a predetermined area in the wide-field image and the second display area for displaying at least a part of the three-dimensional image in which the second position (second coordinates) is associated with the first position (first coordinates) in the wide-field image by the processing unit 54.

When the three-dimensional image management DB 5003 manages, for example, a three-dimensional point cloud, a mesh object, or a textured mesh object instead of a three-dimensional model, the display area 620 displays at least a part of a three-dimensional image including a three-dimensional point cloud, a mesh object, or a textured mesh object as a three-dimensional area corresponding to a target object included in a wide-field image.

The screen 600 includes a close button 609 to be pressed to close the screen 600.

Further, the display content of the screen 600 is described in detail below. The virtual camera IC1 is used to specify the predetermined-area image displayed in the display area 610 (see FIG. 8), and a virtual camera IC2 described below is used to specify the three-dimensional image displayed in the display area 620.

Step S111: The generation unit 53 of the communication control apparatus 5 specifies, in the wide-field image of the content data received by the communication unit 51, a predetermined-area image to be displayed in the display area 610 as illustrated in FIG. 25, based on the field-of view information (in the example, the virtual field of view of the virtual camera IC1 set in advance).

Step S112: The processing unit 54 aligns the position of the virtual camera IC2 with an image capturing position associated with the wide-field image obtained by the image capturing device 10 and aligns the virtual field of view of the virtual camera IC1 (an example of a second field of view) with the virtual field of view of the virtual camera IC2 set in advance (an example of a first field of view). Accordingly, the generation unit 53 generates a three-dimensional image to be displayed in the display area 620.

Step S113: The generation unit 53 determines whether the field of view of the virtual camera IC1 in the display area 610 has been changed (see FIG. 6C). For example, when the participant A performs an operation of changing the predetermined-area image in the display area 610 illustrated in FIG. 25, the reception unit 92 receives the changed field of view, and the communication unit 91 transmits field-of-view information indicating the changed field of view to the communication control apparatus 5. When the communication unit 51 receives the field-of-view information indicating the changed field of view, the generation unit 53 determines that the field of view of the virtual camera IC1 has been changed. When the field of view of the virtual camera IC1 is changed (Step S113; YES), the process returns to Step S111.

Step S114: On the other hand, when the field of view of the virtual camera IC1 has not been changed (Step S113; NO), the generation unit 53 determines whether the position (viewpoint) of the virtual camera IC2 has been changed. For example, when the three-dimensional image in the display area 620 illustrated in FIG. 25 is changed by the participant A, the reception unit 92 receives the changed position of the virtual camera IC2, and the communication unit 91 transmits position information indicating the changed position to the communication control apparatus 5. When the communication unit 51 receives the position information indicating the changed position, the generation unit 53 determines that the position of the virtual camera IC2 has been changed.

The change in the position of the virtual camera IC2 is described below with reference to FIGS. 26 and 27 (FIG. 27A to 27H). FIG. 26 is a diagram illustrating a screen displaying a three-dimensional image in which the position and the field of view of the virtual camera IC2 have been changed from those in the three-dimensional image illustrated in FIG. 25. FIGS. 27A to 27D are diagrams each illustrating a different position of the virtual camera IC2. FIGS. 27E to 27H are diagrams illustrating three-dimensional images displayed corresponding to the respective positions of the virtual camera IC2 illustrated in FIGS. 27 A to 27D.

When the participant A operates a cursor c1 on the communication terminal 9a as illustrated in FIG. 26, the generation unit 53 generates the screen 600 as illustrated in FIG. 26, and then, the display control unit 94 displays the screen 600 as illustrated in FIG. 26. FIG. 26 corresponds to FIGS. 27A and 27E. That is, in FIG. 27A, when the virtual camera IC2 is oriented to the south, a three-dimensional image as illustrated in FIG. 27E is displayed in the display area 620. Further, as illustrated in FIGS. 27B, 27C, and 27D, when the position of the virtual camera IC2 is moved to be oriented to the east, the north, and the west, respectively, the three-dimensional images as illustrated in FIGS. 27F, 27G, and 27H are displayed in the display area 620, respectively. As described above, the participant A can change the three-dimensional image displayed in the display area 620 by operating the display area 620 using the cursor c1. This allows the participant A to view a three-dimensional model (for example, a plurality of stacked boxes) that is not displayed in FIG. 27A. Further, this allows the participant A to view the back of a three-dimensional model (for example, a pillar) that is not displayed in FIG. 27A.

Step S115: Returning to FIG. 22 and also referring to FIG. 23, when the position of the virtual camera IC2 is not changed (Step S114; NO), the generation unit 53 determines whether the field of view of the virtual camera IC2 has been changed. For example, when the participant A changes the three-dimensional image in the display area 620 illustrated in FIG. 25, the reception unit 92 receives the changed field of view, and the communication unit 91 transmits field-of-view information indicating the changed field of view to the communication control apparatus 5. When the communication unit 51 receives the field-of-view information indicating the changed field of view, the generation unit 53 determines that the field of view of the virtual camera IC2 has been changed.

Step S116: When the field of view of the virtual camera IC2 has been changed (Step S115; YES), the generation unit 53 enlarges the three-dimensional image of the display area 620 as illustrated in FIG. 28, or reduces the three-dimensional image as illustrated in FIG. 29 according to the change of the field of view of the virtual camera IC2.

Step S117: Simultaneously with or immediately after the processing Step S116, the generation unit 53 changes the predetermined-area image displayed in the display area 610 by changing the field of view of the virtual camera IC2 according to the change of (in conjunction with the change in) the field of view of the virtual camera IC1.

FIG. 28 is a diagram illustrating a screen in which the predetermined-area image is enlarged in accordance with the enlargement of the three-dimensional image. FIG. 29 is a diagram illustrating a screen in which the predetermined-area image is reduced in size in accordance with the reduction of the three-dimensional image. As an example of changing the predetermined-area image, the generation unit 53 enlarges the predetermined-area image displayed in the display area 610 as illustrated in FIG. 28, or reduces the predetermined-area image displayed in the display area 610 as illustrated in FIG. 29.

Step S118: On the other hand, in Step S114 of FIG. 22, when the position (viewpoint) of the virtual camera IC2 is changed (YES), the generation unit 53 changes the three-dimensional image according to the change of the position of the virtual camera IC2. Since the three-dimensional image displayed in the display area 620 is an image in the virtual space, the position of the virtual camera IC2 can be freely changed (Step S114; YES), but the image capturing position of the image capturing device 10 in the real world is not always freely changeable.

In the present embodiment, the image capturing position of the image capturing device 10 in the real world is fixed or manually movable in the real world, and thus the image capturing position of the image capturing device 10 in the real world is not automatically changeable according to the change of the position of the virtual camera IC2 in a virtual world. To cope with this, in some embodiments, the image capturing position of the image capturing device 10 in the real world may be automatically changeable according to the change of the position of the virtual camera IC2 in the virtual world by providing a mechanism (device) to automatically change the image capturing position of the image capturing device 10.

Step S119: After Step S118, as illustrated in FIG. 23, the generation unit 53 determines whether at least a part of the predetermined-area image displayed in the display area 610 is included in the three-dimensional image.

Step S120: When the three-dimensional image includes at least a part of the predetermined-area image displayed in the display area 610 (Step S119; YES), the generation unit 53 superimposes a corresponding predetermined area 621 that corresponds to the field of view of the virtual camera IC1 on the display area 620 as illustrated in FIG. 30. FIG. 30 is a diagram illustrating a screen in which the corresponding predetermined area, the icon of the virtual camera IC1, and the line of sight of the virtual camera IC1 are displayed in the display area 620. The corresponding predetermined area 621 is an area corresponding to the predetermined area of the predetermined-area image displayed in the display area 610. In FIG. 30, the corresponding predetermined area 621 is indicated by a broken line as an example of a display mode. The display mode includes a broken line and a solid line of a predetermined color, and the thickness of the broken line and the solid line may be different from that of other portions.

The generation unit 53 superimposes an icon 622 of the virtual camera IC1 on the display area 620 to indicate a position corresponding to the image capturing position of the image capturing device 10 and indicate the virtual camera IC1 being oriented towards a center point CP1 of the corresponding predetermined area 621. The icon 622 is an example of a schematic diagram (image) of the virtual camera IC1. The icon 622 is an example of a position image. The schematic diagram, or the position image, includes characters such as "camera" and a diagram including the characters in addition to an icon. The icon 622 may be simply represented by a shape such as a circle to indicate the image capturing position of the image capturing device 10 and may be arranged in the vicinity of the area corresponding to the field of view of the virtual camera IC1 instead of being arranged at the exact position corresponding to the image capturing position of the image capturing device 10.

Further, the generation unit 53 superimposes a line 623 on the display area 620 to indicate the line of sight of the virtual camera IC1 from the icon 622 towards the center point CP1. The line 623 may be a solid line or a broken line or may be displayed with a thickness or color different from those of other lines.

As a modification of the screen illustrated in FIG. 30, the screen 600 may initially include the display area 620 alone without including the display area 610, and the display area 610 may be displayed on the screen 600 in response to the reception unit 92 receiving a user operation on the icon 622. At this time, the display area 620 may not be displayed on the screen 600, and may be displayed on another screen.

Step S121: Returning to FIG. 23, when the determination of Step S115 indicates that the field of view of the virtual camera IC2 has not been changed (NO), when the determination of Step S119 after Step S117 indicates that at least a part of the predetermined-area image displayed in the display area 610 is not included in the three-dimensional image (NO), or after Step S120, the generation unit 53 determines whether the communication unit 51 has acquired an instruction to move a predetermined three-dimensional model in the three-dimensional image.

Step S122: When the communication unit 51 acquires (receives) an instruction to move a predetermined three-dimensional model in the three-dimensional image (Step S121; YES), the generation unit 53 generates a three-dimensional image in which the predetermined three-dimensional model is moved in accordance with the instruction as illustrated in FIG. 31. FIG. 31 is a diagram illustrating a screen in which a three-dimensional model is moved to be displayed in the display area 620 and an image corresponding to the three-dimensional model is displayed in the display area 610. A three-dimensional model m2 in FIG. 31 corresponds to a three-dimensional model m1 in FIG. 30 after the three-dimensional model m1 is moved to the front closer to the icon 622. In this case, the processing unit 54 changes the parameter of the position information of the three-dimensional model managed in the three-dimensional image management DB 5003 via the storing/reading unit 59.

Step S123: Referring to FIGS. 23 and 24, when the communication unit 51 does not acquire the instruction to move the predetermined three-dimensional model in the three-dimensional image in Step S121 (NO), or after the Step S122, the generation unit 53 determines whether the communication unit 51 acquires (receives) an instruction to process or add a three-dimensional model or an instruction to draw the three-dimensional model in the three-dimensional image. Then, when the communication unit 51 does not acquire an instruction to process or add a three-dimensional model or an instruction to draw the three-dimensional model in the three-dimensional image (Step S123; NO), the screen display process illustrated in FIG. 24 ends.

Step S124: On the other hand, when the communication unit 51 acquires an instruction to process or add a three-dimensional model or an instruction to draw a three-dimensional model in a three-dimensional image (Step S123; YES), the generation unit 53 processes or adds a three-dimensional model in accordance with the instruction, or superimposes a drawn image on the three-dimensional image in accordance with the instruction, as illustrated in FIG. 32. FIG. 32 is a diagram illustrating a screen in which a three-dimensional model is processed and added, and a drawn image is added in the display area 620, and images corresponding to the three-dimensional model and the drawn image are displayed in the display area 610. A three-dimensional model m3 in FIG. 32 corresponds to the three-dimensional model m2 in FIG. 31 after the three-dimensional model m2 is processed to have a low height. In FIG. 32, a three-dimensional model m5 is newly added on the upper face of the three-dimensional model m3. Further, in FIG. 32, a drawn image of "SLIDE" indicating that the three-dimensional model m1 has been moved to the front closer to the icon 622 of the virtual camera IC1 is superimposed.

In the case of processing a three-dimensional model, the processing unit 54 changes the parameters of, for example, the position information of the three-dimensional model managed in the three-dimensional image management DB 5003 via the storing/reading unit 59.

In the case of adding a three-dimensional model, the processing unit 54 newly adds the parameters of, for example, the position information of a predetermined three-dimensional model to the three-dimensional image management DB 5003 via the storing/reading unit 59. In this case, the processing unit 54 associates coordinates indicating the model position of the predetermined three-dimensional model in the three-dimensional image with the corresponding coordinates in the wide-field image having the same absolute position.

Further, in the case of drawing an image, the processing unit 54 newly adds the parameters of the drawn image to the three-dimensional image management DB 5003 via the storing/reading unit 59 to be managed in the same manner as the parameters of the position information of the three-dimensional models. In this case, the processing unit 54 associates coordinates indicating a drawing position that is the position of drawing in the three-dimensional image with the corresponding coordinates in the wide-field image having the same absolute position.

Step S125: The generation unit 53 determines whether at least a part of the three-dimensional model after the movement, the processing, or the addition, or at least a part of the drawn image is included in the predetermined-area image displayed in the display area 610. When at least a part of the three-dimensional model after the movement, the processing, or the addition, or at least a part of the drawn image is not included in the predetermined-area image displayed in the display area 610 (Step S125; NO), the screen display process in FIG. 24 ends.

Step S126: When at least a part of the moved, processed, or added three-dimensional model or at least a part of the drawn image is included in the predetermined-area image displayed in the display area 610 (Step S125; YES), the generation unit 53 superimposes at least the part of the moved, processed, or added three-dimensional model or at least the part of the drawn image on the predetermined-area image in the display area 610, as illustrated in FIG. 32. In FIG. 32, an image M3 corresponding to a part of the three-dimensional model m3 is superimposed. Further, an image M5 corresponding to a part of the three-dimensional model m5 is superimposed on the predetermined-area image. Further, an image D1 corresponding to a part of a drawn image d1 is superimposed on the predetermined-area image. Thus, the screen display process in FIG. 24 ends.

As described above, according to the present embodiment, the processing unit 54 associates position information indicating the first position (coordinates) in a captured image obtained by capturing a target object with position information indicating the second position

(coordinates) in a three-dimensional image including a three-dimensional area corresponding to the target object, and the generation unit 53 (or the generation unit 73,93) generates the screen 600 including the display area 610 displaying a predetermined-area image that is the predetermined area in the captured image obtained by capturing the target object and the display area 620 displaying at least a part of the three-dimensional image in which the first position in the captured image and the second position are associated with each other by the processing unit 54.

Accordingly, the user can recognize what the predetermined-area image captures and where the predetermined-area image is captured by viewing the screen 600. Even if the back of an object is not captured, the user can grasp the state of the back of the object by viewing the screen 600. Accordingly, generating an image that complements the captured image obtained by image capturing enhances user convenience.

The above-described embodiments are illustrative and do not limit the present disclosure. Thus, numerous additional modifications and variations are possible in light of the above teachings within the scope of the present disclosure. Any one of the above-described operations may be performed in various other ways, for example, in an order different from the one described above.

The "processing circuit or circuitry" in the specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit modules designed to perform the recited functions.

The above-described programs may be stored in a (non-transitory) recording medium such as a DVD-ROM to be distributed domestically or internationally as a program product.

The number of each of the CPU 111, the CPU 301, and the CPU 501 serving as a processor that is hardware may be a single or multiple.

Aspect 1

An information processing apparatus for generating a screen to be displayed includes a processing unit to associate first position information indicating a first position in a captured image with second position information indicating a second position in a three-dimensional image. The captured image is obtained by capturing an image of a target object. The three-dimensional image includes a three-dimensional area corresponding to the target object. The information processing apparatus includes a generation unit to generate a screen including a first display area and a second display area. The first display area displays a predetermined-area image that is a predetermined area in the captured image. The second display area displays at least a part of the three-dimensional image in which the second position is associated with the first position in the captured image by the processing unit. The information processing apparatus includes an acquisition unit to acquire an instruction to process the three-dimensional image. The generation unit processes the three-dimensional image based on the instruction.

Aspect 2

In the information processing apparatus of Aspect 1, the acquisition unit acquires, as the instruction to process the three-dimensional image, an instruction to move or process a three-dimensional model representing the shape of the target object in three dimensions.

The generation unit moves the three-dimensional model based on the instruction to move the three-dimensional model when the instruction to move the three-dimensional model is acquired by the acquisition unit, or processes the three-dimensional model based on the instruction to process the three-dimensional model when the instruction to process the three-dimensional model is acquired by the acquisition unit.

Aspect 3

In the information processing apparatus of Aspect 2, in a case that at least a part of the three-dimensional model that has been moved according to the instruction to move the three-dimensional model is included in the predetermined area, the generation unit superimposes an image of at least the part of the three-dimensional model that has been moved on the predetermined-area image. In the information processing apparatus of Aspect 2, in a case that at least a part of the three-dimensional model that has been processed according to the instruction to process the three-dimensional model is included in the predetermined area, the generation unit superimposes an image of at least the part of the three-dimensional model that has been processed on the predetermined-area image.

Aspect 4

In the information processing apparatus of Aspect 1, the acquisition unit acquires as the instruction to process the three-dimensional image, an instruction to add a predetermined three-dimensional model in the three-dimensional image or an instruction to draw an image in the three-dimensional image. The generation unit superimposes the predetermined three-dimensional model on the three-dimensional image based on the instruction to add the predetermined three-dimensional model when the instruction to add the predetermined three-dimensional model is acquired by the acquisition unit, or superimposes a drawn image on the three-dimensional image based on the instruction to draw the image when the instruction to draw the image is acquired by the acquisition unit.

Aspect 5

In the information processing apparatus of Aspect 4, when the predetermined three-dimensional model is added, the processing unit associates the second position information indicating the second position with first position information indicating the first position in the captured image, the second position indicating a model position of the predetermined three-dimensional model in the three-dimensional image. When at least a part of the predetermined three-dimensional model is included in the predetermined area, the generation unit superimposes an image of at least the part of the predetermined three-dimensional model on the predetermined-area image. When a drawing is performed, the processing unit associates the second position information indicating the second position with the position information indicating the first position in the captured image, the second position indicating a drawing position that is a position of the drawing in the three-dimensional image.

When at least a part of the drawn image is included in the predetermined area, the generation unit superimposes at least a part of the drawn image on the predetermined-area image.

Aspect 6

A screen generation method executed by an information processing apparatus to generate a screen to be displayed includes associating first position information indicating a first position in a captured image with second position information indicating a second position in a three-dimensional image. The captured image is obtained by capturing an image of a target object. The three-dimensional image includes a three-dimensional area corresponding to the target object. The screen generation method includes generating a screen including a first display area and a second display area. The first display area displays a predetermined-area image that is a predetermined area in the captured image. The second display area displays at least a part of the three-dimensional image in which the second position is associated with the first position in the captured image.

The screen generation method includes acquiring an instruction to process the three-dimensional image. The generating the screen includes processing the three-dimensional image based on the instruction.

Aspect 7

The program causes a computer to execute the method of Aspect 6.

Aspect 8

An information processing system includes an information processing apparatus and a display terminal communicably connected to the information processing apparatus. The information processing apparatus includes a processing unit to associate first position information indicating a first position in a captured image with second position information indicating a second position in a three-dimensional image. The captured image is obtained by capturing an image of a target object. The three-dimensional image includes a three-dimensional area corresponding to the target object. The information processing apparatus includes a generation unit to generate a screen including a first display area and a second display area. The first display area displays a predetermined-area image that is a predetermined area in the captured image. The second display area displays the three-dimensional image in which the second position is associated with the first position in the captured image by the processing unit. The information processing apparatus includes an acquisition unit to acquire an instruction to process the three-dimensional image. The generation unit processes the three-dimensional image based on the instruction. The display terminal includes a display control unit to cause a display to display the screen generated by the generation unit.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (5), comprising:

   a processing unit (501, 54) configured to associate first position information indicating a first position in a captured image with second position information indicating a second position in a three-dimensional image, the captured image being obtained by capturing an image of a target object, the three-dimensional image including a three-dimensional area corresponding to the target object; and

   a generation unit (501, 53) configured to generate a screen including a first display area and a second display area, the first display area displaying a predetermined-area image that is a predetermined area in the captured image, the second display area displaying at least a part of the three-dimensional image in which the second position is associated with the first position in the captured image by the processing unit (501, 54).

2. The information processing apparatus (5) of claim 1, wherein
   the generation unit (501, 53) is further configured to align a position of a second virtual camera with an image capturing position for the captured image when the three-dimensional image is displayed in the second display area and align a first field of view for displaying the predetermined-area image in the first display area with a second field of view for displaying the three-dimensional image in the second display area to generate the three-dimensional image to be displayed in the second display area, the second field of view being a virtual field of view.

3. The information processing apparatus (5) of claim 1, wherein
   the generation unit (501, 53) is configured to generate the screen to display, in the second display area, a corresponding predetermined area that corresponds to the predetermined area of the predetermined-area image displayed in the first display area.

4. The information processing apparatus (5) of claim 1, wherein
   the generation unit (501, 53) is configured to generate the screen to display a position image in the second display area, the position image indicating one of the captured image and an image capturing position for the captured image and being at a corresponding one of a position corresponding to the captured image and the image capturing position.

5. The information processing apparatus (5) of claim 4, wherein
   the generation unit (501, 53) is configured to:

   generate the screen that includes the second display area and initially excludes the first display area, wherein,
   when an operation on the position image is received, the generation unit (501, 53) is configured to generate the screen to include the first display area.

6. The information processing apparatus (5) of any one of claims 4 and 5, wherein
   the generation unit (501, 53) is configured to generate the screen to display, as the position image, an image indicating a first virtual camera having an image capturing area corresponding to a field of view for displaying the predetermined-area image in the first display area.

7. The information processing apparatus (5) of claim 6, wherein
   the generation unit (501, 53) is configured to generate the screen to display a line of sight from the image of the first virtual camera toward a center point in the second display area.

8. The information processing apparatus (5) of claim 2, further comprising

   an acquisition unit (501, 51) configured to acquire a change in the first field of view for the captured image, the captured image being a wide-field image having a wide field of view, wherein
   the generation unit (501, 53) is configured to change the second field of view according to the change in the first field of view to change the three-dimensional image displayed in the second display area.

9. The information processing apparatus (5) of claim 1, further comprising

   an acquisition unit (501, 51) configured to acquire an instruction to change a viewpoint with respect to the three-dimensional image, wherein
   the generation unit (501, 53) is configured to change the three-dimensional image displayed in the second display area according to a change in the viewpoint.

10. The information processing apparatus (5) of claim 2, further comprising

    an acquisition unit (501, 51) configured to acquire an instruction to change the second field of view for the three-dimensional image, wherein the generation unit (501, 53) is configured to change the three-dimensional image displayed in the second display area according to a change in the second field of view.

**11.** The information processing apparatus (5) of claim 10, wherein
the generation unit (501, 53) is configured to change the first field of view according to the change in the second field of view to change the predetermined-area image displayed in the first display area.

**12.** The information processing apparatus (5) of claim 11, wherein
the generation unit (501, 53) is configured to:

enlarge the predetermined-area image displayed in the first display area when the change in the second field of view is an enlargement of the three-dimensional image displayed in the second display area; and
reduce the predetermined-area image displayed in the first display area when the change in the second field of view is a reduction of the three-dimensional image displayed in the second display area.

**13.** A screen generation method, comprising:

associating (S112) position first information indicating a first position in a captured image with second position information indicating a second position in a three-dimensional image, the captured image being obtained by capturing an image of a target object, the three-dimensional image including a three-dimensional area corresponding to the target object; and
generating (S112) a screen including a first display area and a second display area, the first display area displaying a predetermined-area image that is a predetermined area in the captured image, the second display area displaying the three-dimensional image in which the second position is associated with the first position in the captured image.

**14.** A carrier means carrying computer-readable codes for controlling a computer to carry out the method according to claim 13.

**15.** An information processing system, comprising:

an information processing apparatus (5); and
a display terminal (7, 9a, 9b) communicably connected to the information processing apparatus (5),

the information processing apparatus (5) including:

a processing unit (501, 54) configured to associate first position information indicating a first position in a captured image with position information indicating a second position in a three-dimensional image, the captured image being obtained by capturing an image of a target object, the three-dimensional image including a three-dimensional area corresponding to the target object; and
a generation unit (501, 53) configured to generate a screen including a first display area and a second display area, the first display area displaying a predetermined-area image that is a predetermined area in the captured image, the second display area displaying the three-dimensional image in which the second position is associated with the first position in the captured image by the processing unit (501, 54),

the display terminal (7, 9a, 9b) including a display control unit (74, 94, 507) configured to cause a display to display the screen generated by the generation unit (501, 53).

FIG. 1C

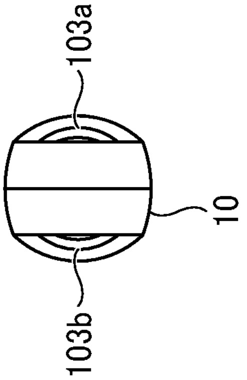


FIG. 1B

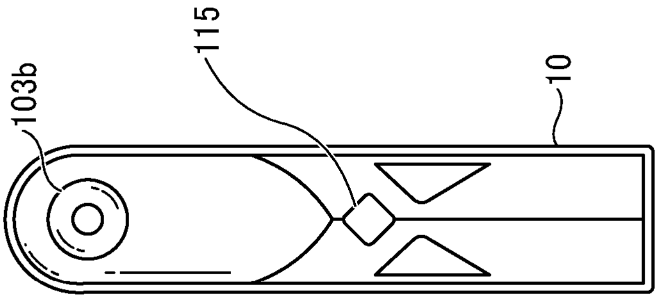


FIG. 1A

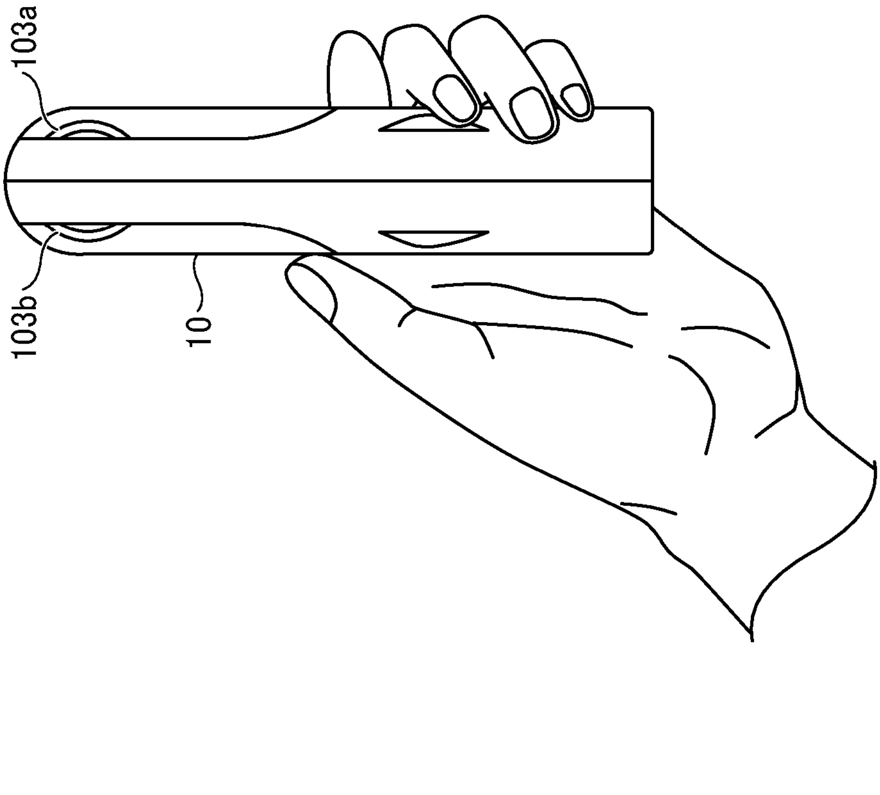

FIG. 2

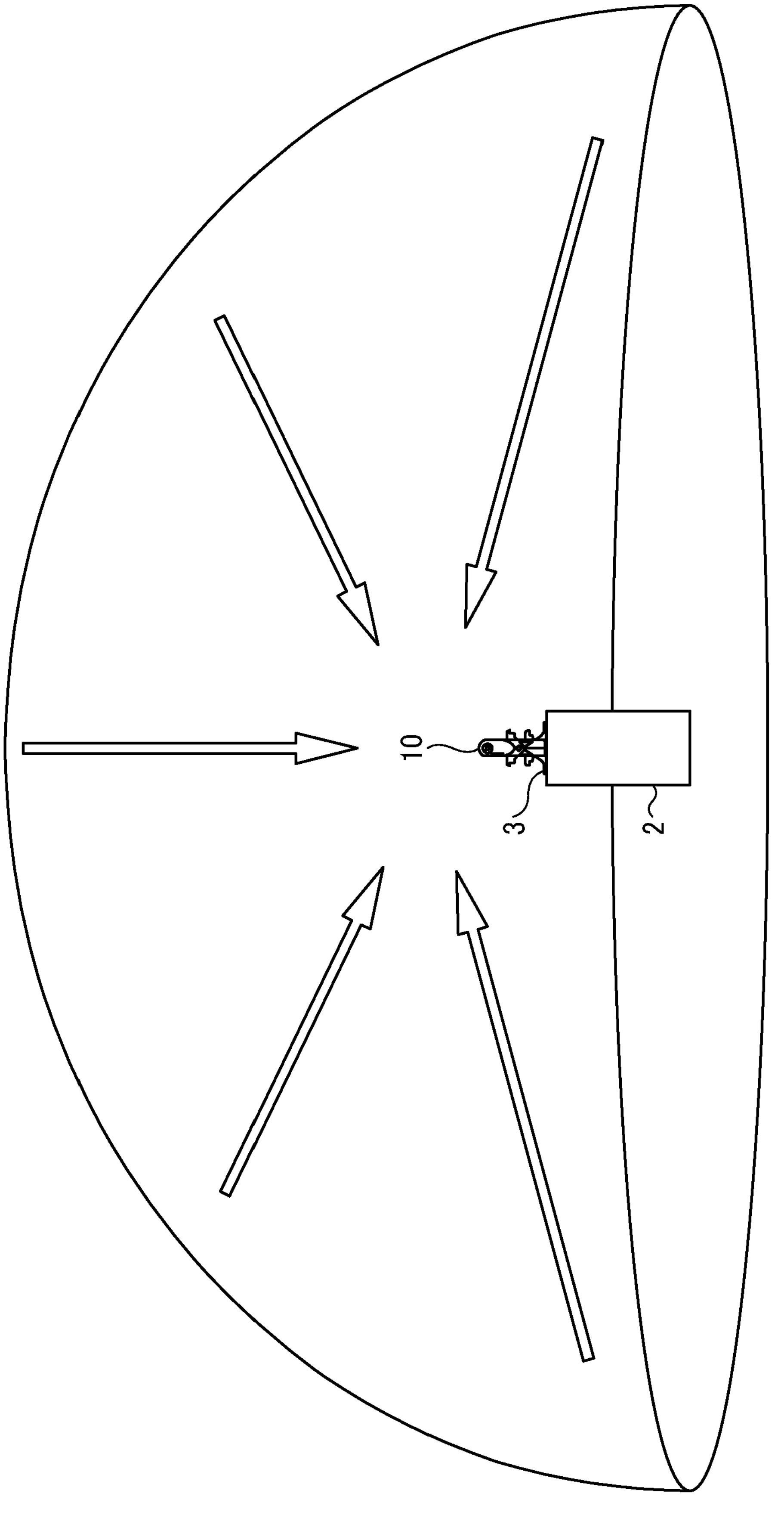

FIG. 3A

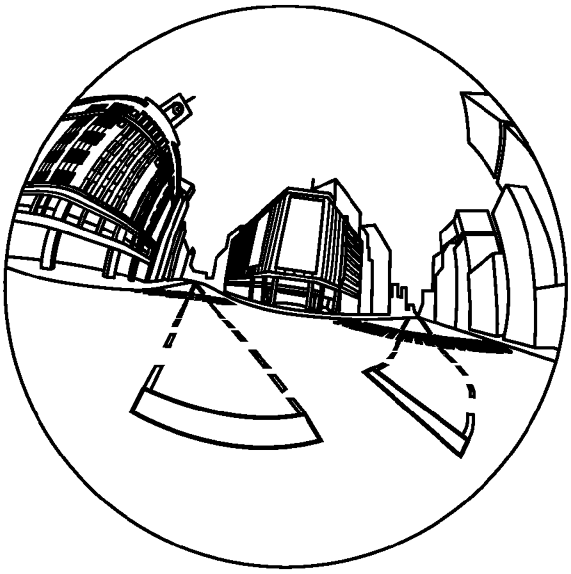

HEMISPHERICAL IMAGE (FRONT)

FIG. 3B

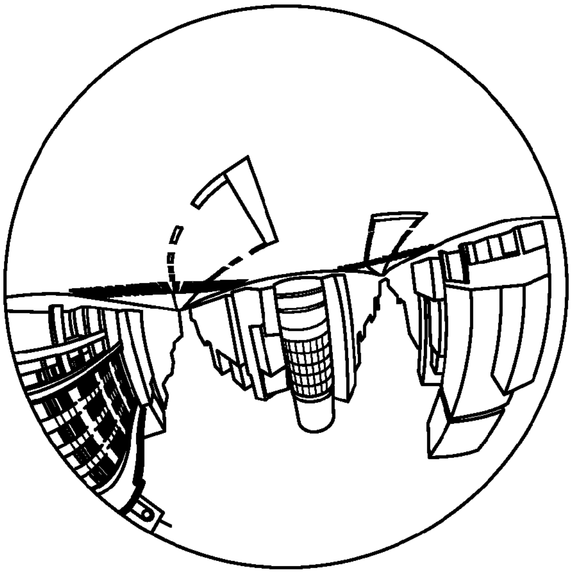

HEMISPHERICAL IMAGE (BACK)

FIG. 3C

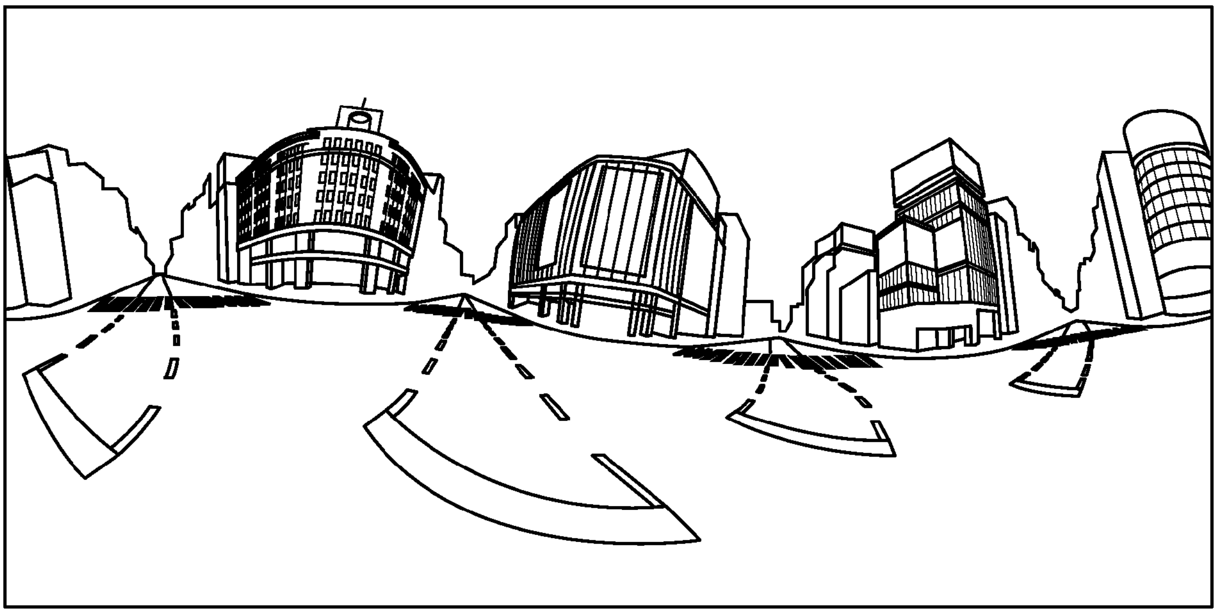

CAPTURED IMAGE (EQUIRECTANGULAR PROJECTION IMAGE EC)

FIG. 4A

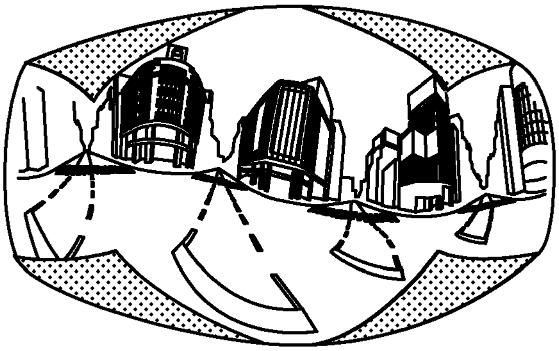

EQUIRECTANGULAR
PROJECTION IMAGE EC

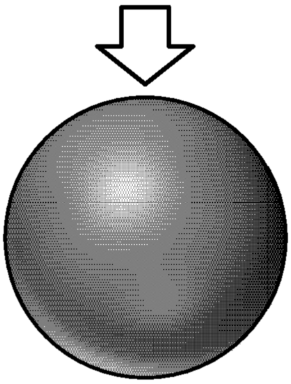

FIG. 4B

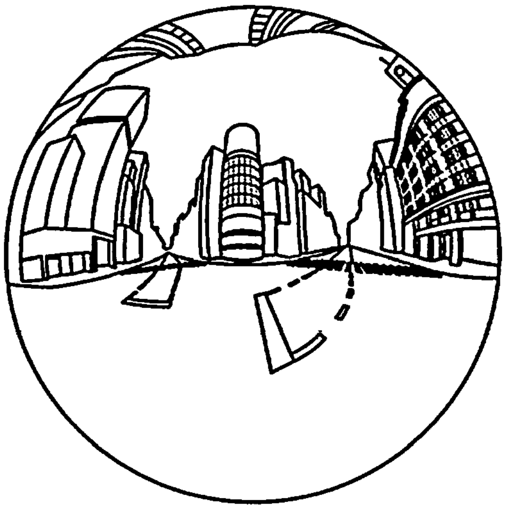

SPHERICAL IMAGE CE

FIG. 5

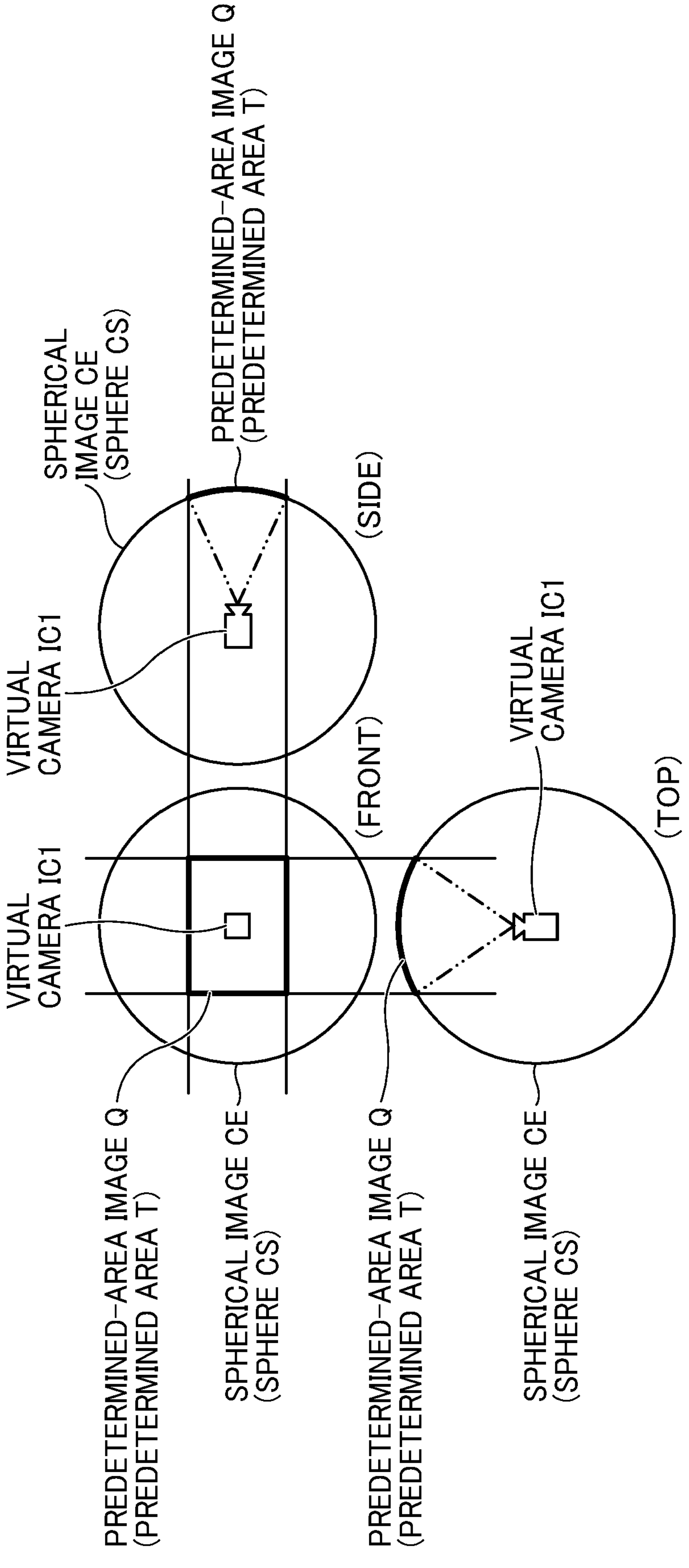
VIRTUAL
CAMERA IC1
VIRTUAL
CAMERA IC1
SPHERICAL
IMAGE CE
(SPHERE CS)
PREDETERMINED-AREA IMAGE Q
(PREDETERMINED AREA T)
(FRONT)
(SIDE)
VIRTUAL
CAMERA IC1
(TOP)
PREDETERMINED-AREA IMAGE Q
(PREDETERMINED AREA T)
SPHERICAL IMAGE CE
(SPHERE CS)
PREDETERMINED-AREA IMAGE Q
(PREDETERMINED AREA T)
SPHERICAL IMAGE CE
(SPHERE CS)

FIG. 6A

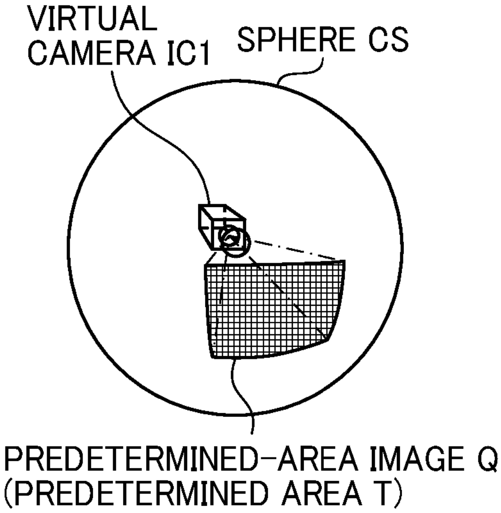


FIG. 6B

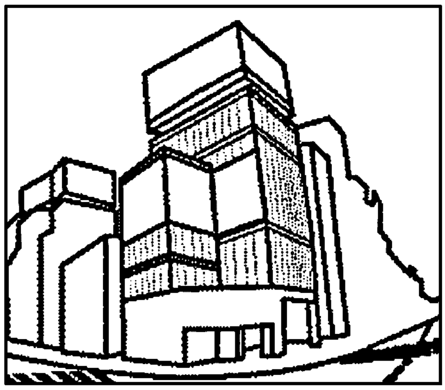

FIG. 6C

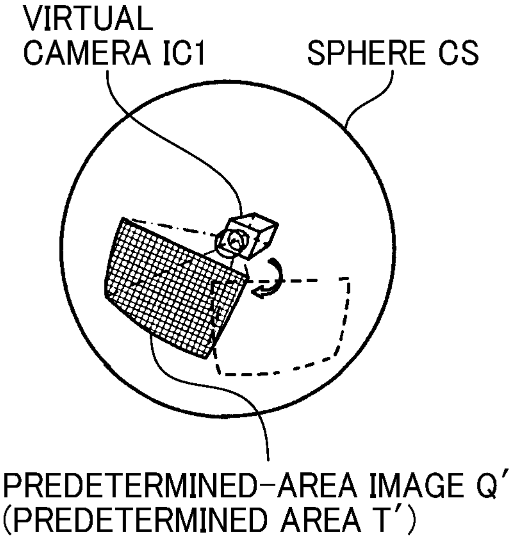


FIG. 6D

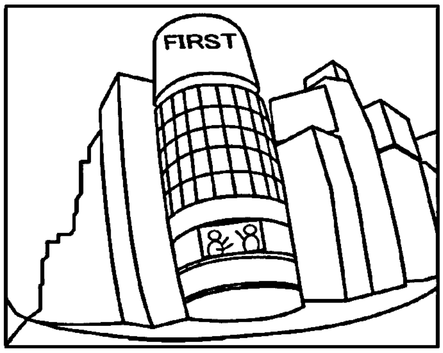

# FIG. 7

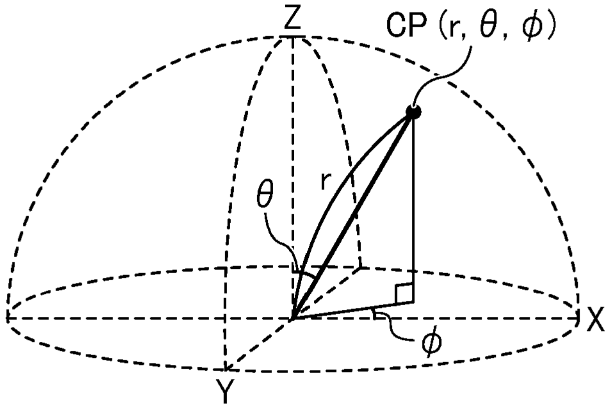
Z
CP (r, θ, ϕ)
θ
r
X
ϕ
Y

# FIG. 8

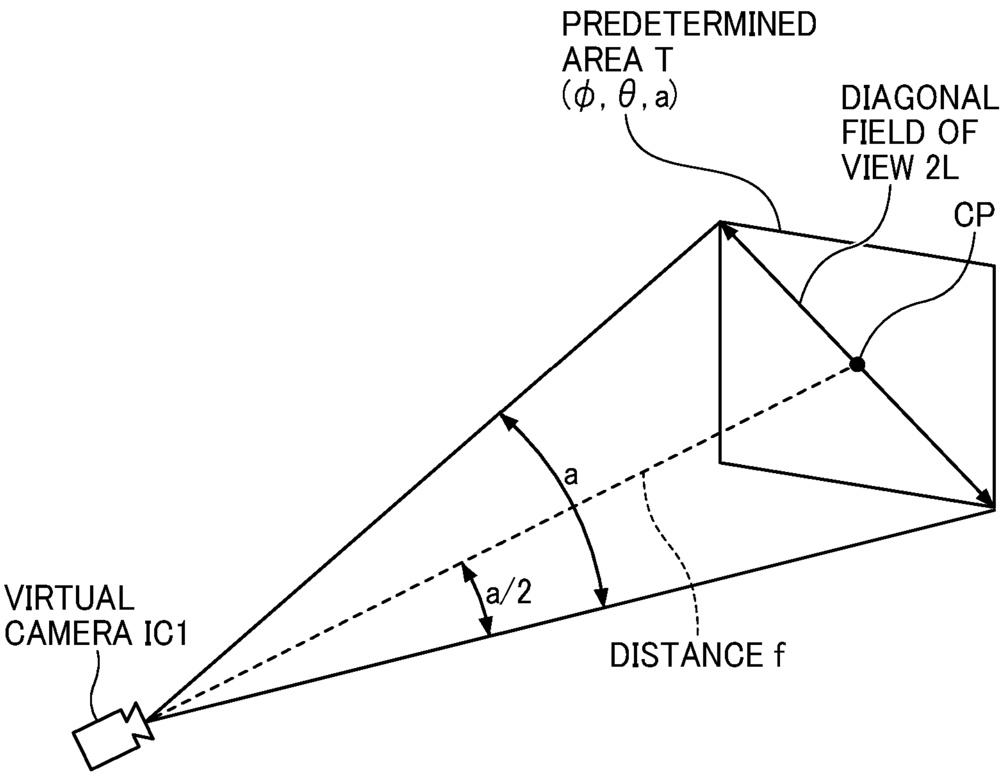
PREDETERMINED
AREA T
(ϕ, θ, a)
DIAGONAL
FIELD OF
VIEW 2L
CP
a
a/2
VIRTUAL
CAMERA IC1
DISTANCE f

FIG. 9

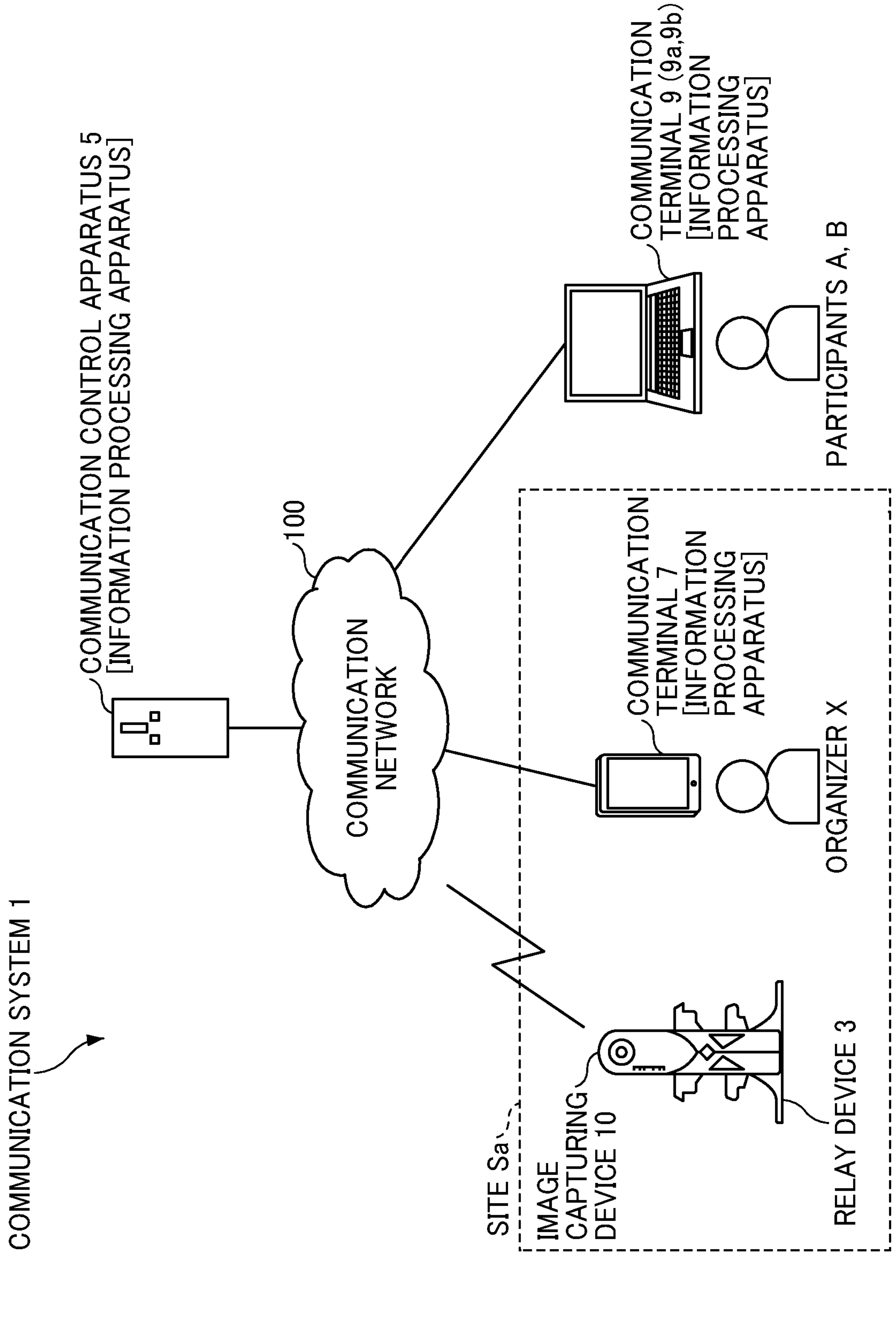
COMMUNICATION SYSTEM 1
COMMUNICATION CONTROL APPARATUS 5
[INFORMATION PROCESSING APPARATUS]
100
COMMUNICATION
NETWORK
COMMUNICATION
TERMINAL 9 (9a,9b)
[INFORMATION
PROCESSING
APPARATUS]
PARTICIPANTS A, B
SITE Sa
IMAGE
CAPTURING
DEVICE 10
RELAY DEVICE 3
COMMUNICATION
TERMINAL 7
[INFORMATION
PROCESSING
APPARATUS]
ORGANIZER X

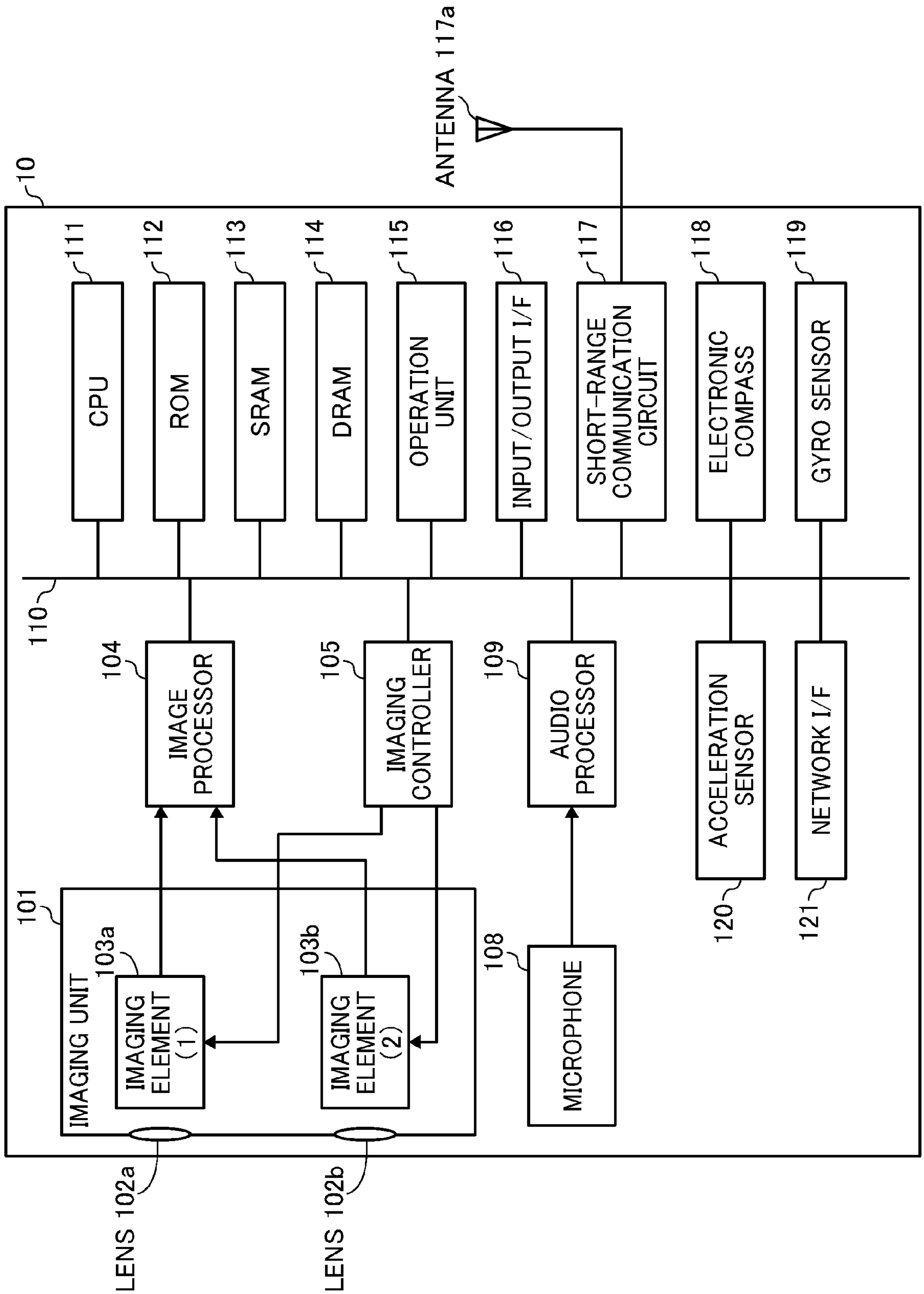
10
ANTENNA 117a
111
CPU
112
ROM
113
SRAM
114
DRAM
115
OPERATION UNIT
116
INPUT/OUTPUT I/F
117
SHORT-RANGE COMMUNICATION CIRCUIT
118
ELECTRONIC COMPASS
119
GYRO SENSOR
110
104
IMAGE PROCESSOR
105
IMAGING CONTROLLER
109
AUDIO PROCESSOR
ACCELERATION SENSOR
120
NETWORK I/F
121
101
IMAGING UNIT
103a
IMAGING ELEMENT (1)
103b
IMAGING ELEMENT (2)
108
MICROPHONE
LENS 102a
LENS 102b

FIG. 10

FIG. 11

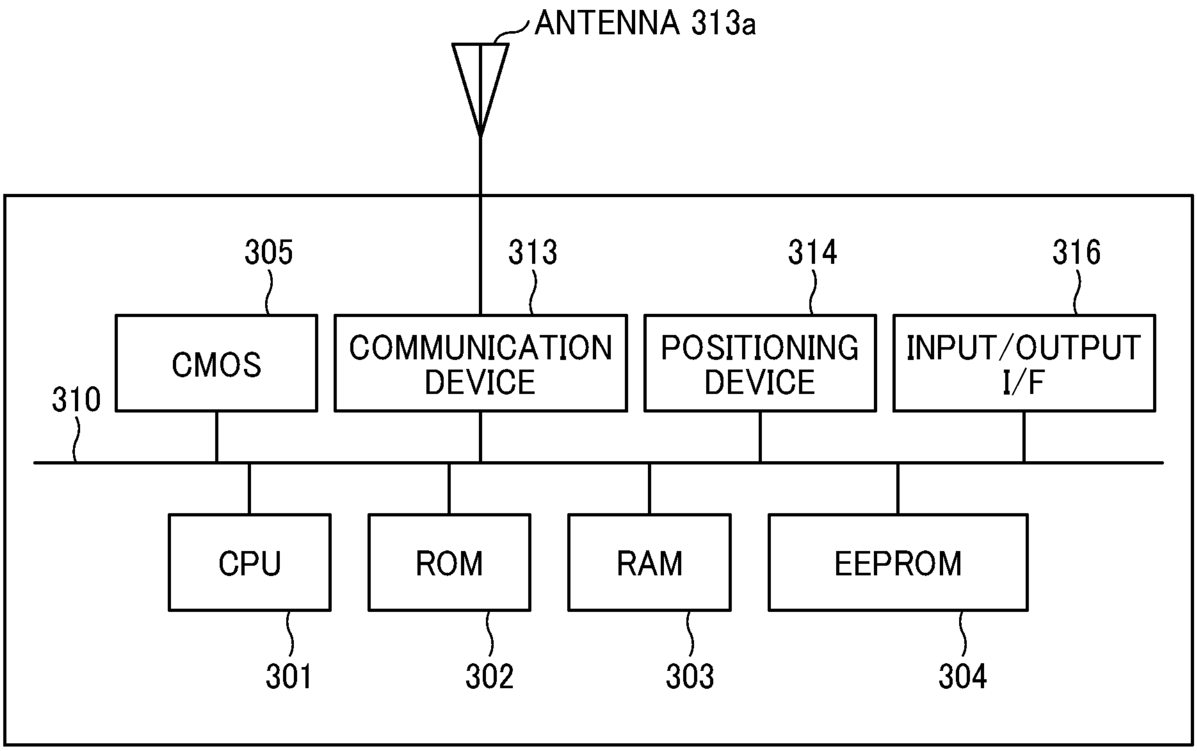
ANTENNA 313a
305
313
314
316
CMOS
COMMUNICATION DEVICE
POSITIONING DEVICE
INPUT/OUTPUT I/F
310
CPU
ROM
RAM
EEPROM
301
302
303
304

FIG. 12

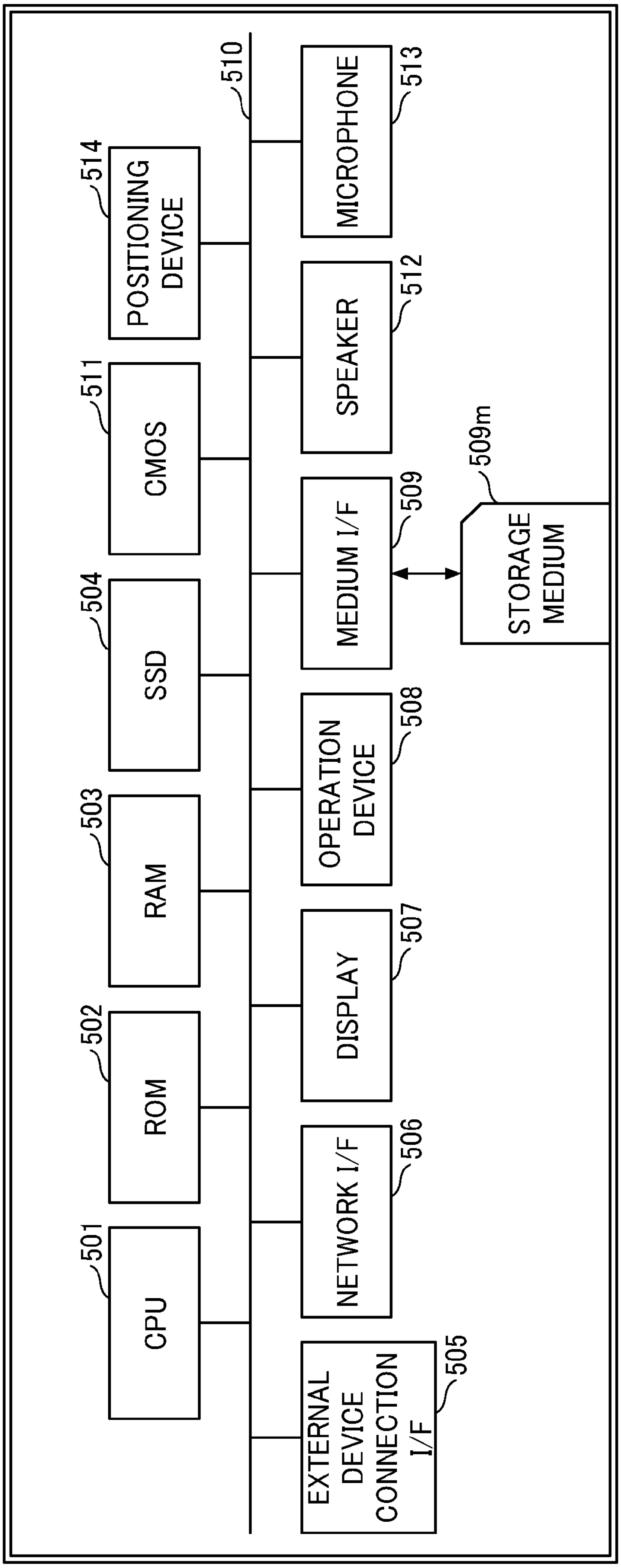
CPU
501
ROM
502
RAM
503
SSD
504
CMOS
511
POSITIONING DEVICE
514
510
EXTERNAL DEVICE CONNECTION I/F
505
NETWORK I/F
506
DISPLAY
507
OPERATION DEVICE
508
MEDIUM I/F
509
SPEAKER
512
MICROPHONE
513
STORAGE MEDIUM
509m

FIG. 13

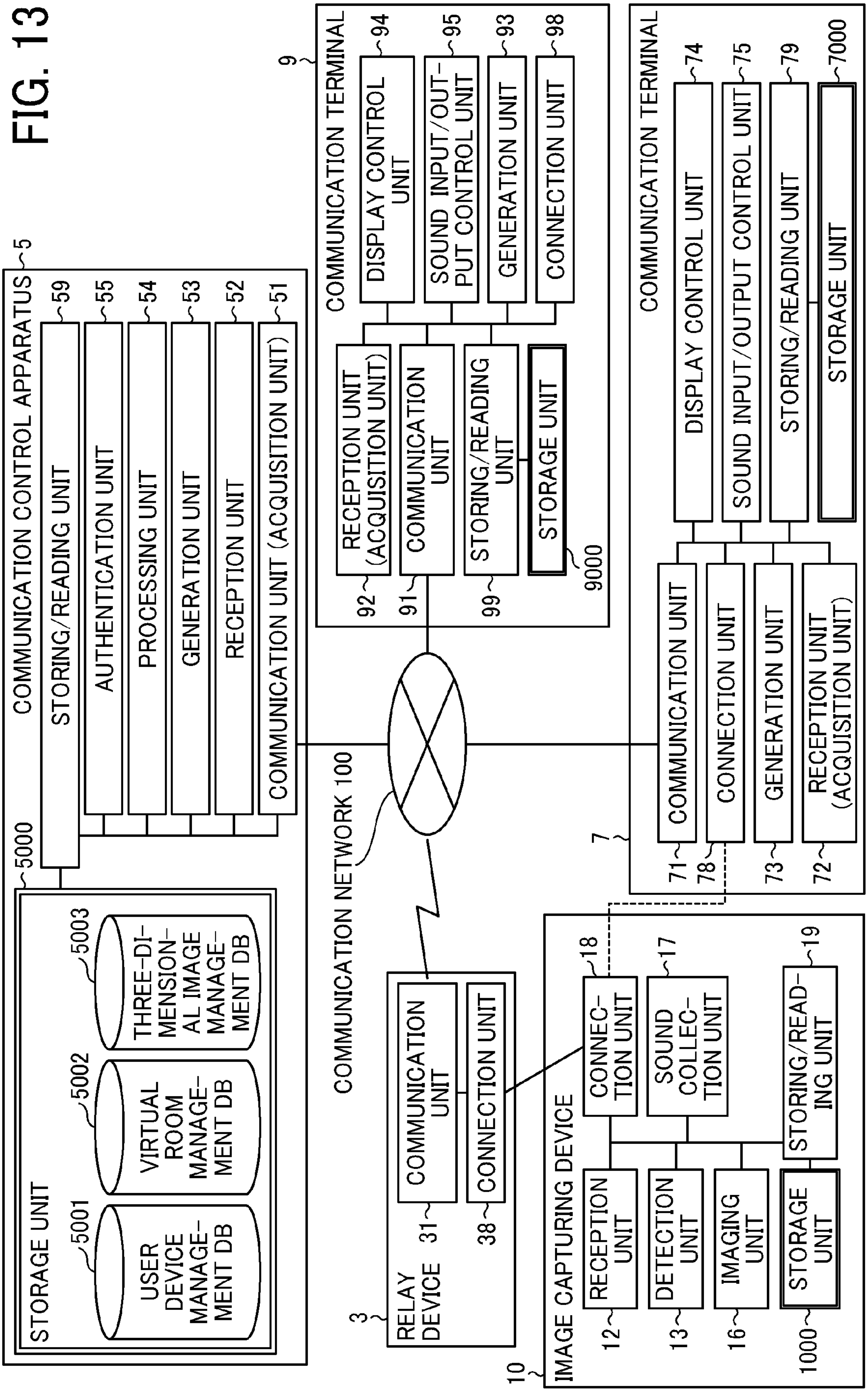
COMMUNICATION CONTROL APPARATUS 5
STORING/READING UNIT 59
AUTHENTICATION UNIT 55
PROCESSING UNIT 54
GENERATION UNIT 53
RECEPTION UNIT 52
COMMUNICATION UNIT (ACQUISITION UNIT) 51
STORAGE UNIT 5000
USER DEVICE MANAGEMENT DB 5001
VIRTUAL ROOM MANAGEMENT DB 5002
THREE-DIMENSIONAL IMAGE MANAGEMENT DB 5003
COMMUNICATION NETWORK 100
COMMUNICATION TERMINAL 9
DISPLAY CONTROL UNIT 94
SOUND INPUT/OUTPUT CONTROL UNIT 95
GENERATION UNIT 93
CONNECTION UNIT 98
RECEPTION UNIT (ACQUISITION UNIT) 92
COMMUNICATION UNIT 91
STORING/READING UNIT 99
STORAGE UNIT 9000
COMMUNICATION TERMINAL 7
DISPLAY CONTROL UNIT 74
SOUND INPUT/OUTPUT CONTROL UNIT 75
STORING/READING UNIT 79
STORAGE UNIT 7000
COMMUNICATION UNIT 71
CONNECTION UNIT 78
GENERATION UNIT 73
RECEPTION UNIT (ACQUISITION UNIT) 72
RELAY DEVICE 3
COMMUNICATION UNIT 31
CONNECTION UNIT 38
IMAGE CAPTURING DEVICE 10
CONNECTION UNIT 18
SOUND COLLECTION UNIT 17
STORING/READING UNIT 19
RECEPTION UNIT 12
DETECTION UNIT 13
IMAGING UNIT 16
STORAGE UNIT 1000

# FIG. 14

| DEVICE ID/USER ID | PASSWORD | NAME | USER IMAGE | IP ADDRESS |
|---|---|---|---|---|
| 111d | pw111d | IMAGE CAPTURING DEVICE $\alpha$ | | 1.1.1.1. |
| 112d | pw112d | IMAGE CAPTURING DEVICE $\beta$ | | 1.2.1.1. |
| 100x | pw100x | ORGANIZER X | 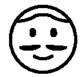 | 1.1.1.2. |
| 100a | pw100a | PARTICIPANT A | 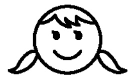 | 1.1.2.1. |
| 100b | pw100b | PARTICIPANT B | 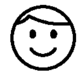 | 1.1.2.2. |
| 100c | pw100c | PARTICIPANT C | 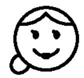 | 1.1.2.3. |
| ... | ... | ... | ... | ... |

# FIG. 15

| VIRTUAL ROOM ID | VIRTUAL ROOM NAME | DEVICE ID | ORGANIZER ID | PARTICIPANT ID | CONTENT ID | CONTENT URL | FIELD-OF-VIEW INFORMATION URL | THREE-DIMENSIONAL IMAGE ID |
|---|---|---|---|---|---|---|---|---|
| 111r | CONSTRUCTION SITE $\alpha$ | 101d | 100x | 100a, 100b | c101 | ... | ... | v001 |
| 112r | FACTORY $\eta$ | 102d | 100y | 100e, 100f | c102 | ... | ... | v002 |
| ... | ... | ... | ... | ... | ... | ... | ... | ... |

# FIG. 16A

| THREE-DIMENSIONAL IMAGE ID | MODEL ID | POSITION INFORMATION |
|---|---|---|
| v001 | M0001 | X1,Y1,Z1 |
| | ··· | ··· |
| | ··· | ··· |
| | ··· | ··· |
| | ··· | ··· |
| | ··· | ··· |
| v002 | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |
| ··· | ··· | ··· |

# FIG. 16B

(THREE-DIMENSIONAL IMAGE ID: v102)

DATE N

(THREE-DIMENSIONAL IMAGE ID: v101)

| COMPONENT NO. | COMPONENT INFORMATION | DIMENSION INFORMATION | COLOR INFORMATION | MATERIAL INFORMATION | POSITION INFORMATION | CONSTRUCTION DATE INFORMATION |
|---|---|---|---|---|---|---|
| 1 | WALL | ... | ... | WOOD | ... | 2023.5. |
| 2 | WALL | ... | BLACK | ... | ... | 2023.5. |
| ... | ... | ... | ... | ... | ... | ... |
| ... | FLOOR | ... | ... | ... | ... | ... |
| ... | ... | ... | ... | ... | ... | ... |
| ... | CEILING | ... | ... | ... | ... | ... |
| ... | ... | ... | ... | ... | ... | ... |
| ... | WINDOW | ... | ... | GLASS | ... | ... |
| ... | ... | ... | ... | ... | ... | ... |
| ... | PIPE | ... | ... | STAINLESS STEEL | ... | 2023.10. |
| ... | ... | ... | ... | ... | ... | ... |
| ... | DOOR | ... | ... | ... | ... | ... |
| ... | ... | ... | ... | ... | ... | ... |
| ... | ... | ... | ... | ... | ... | ... |

FIG. 17

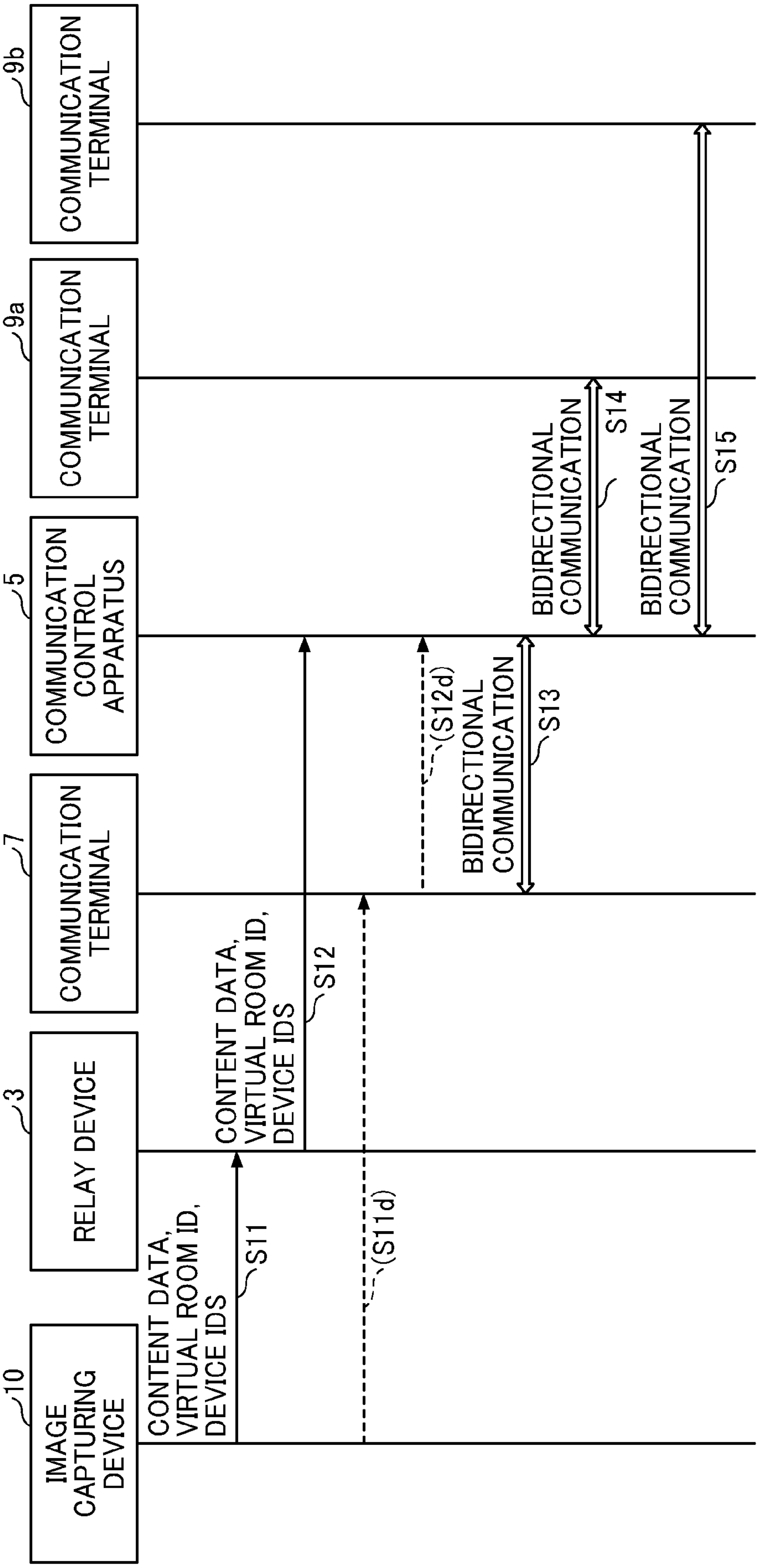
10
IMAGE CAPTURING DEVICE
3
RELAY DEVICE
7
COMMUNICATION TERMINAL
5
COMMUNICATION CONTROL APPARATUS
9a
COMMUNICATION TERMINAL
9b
COMMUNICATION TERMINAL
CONTENT DATA, VIRTUAL ROOM ID, DEVICE IDS
S11
CONTENT DATA, VIRTUAL ROOM ID, DEVICE IDS
S12
(S11d)
(S12d)
BIDIRECTIONAL COMMUNICATION
S13
BIDIRECTIONAL COMMUNICATION
S14
BIDIRECTIONAL COMMUNICATION
S15

FIG. 18

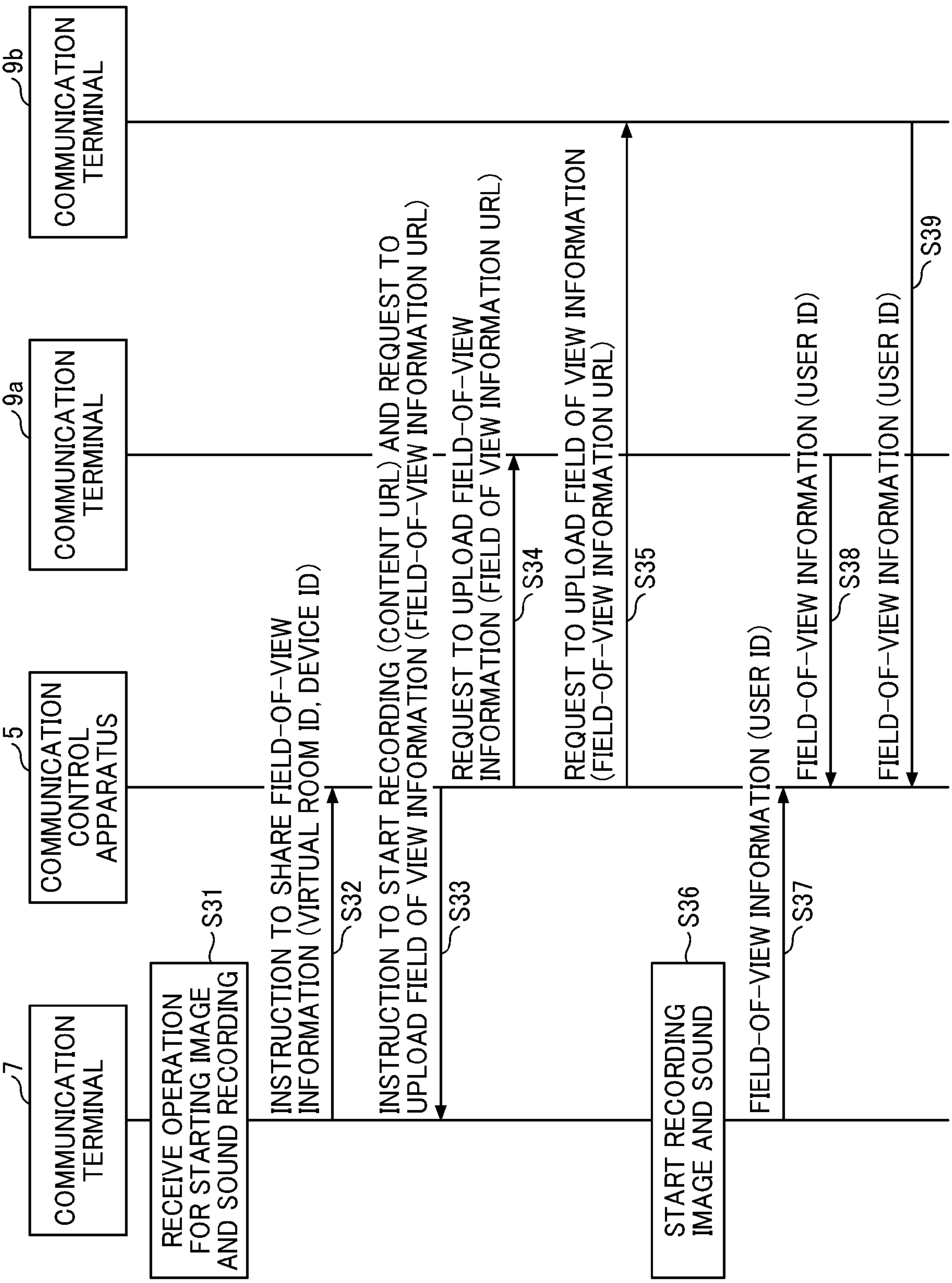
COMMUNICATION TERMINAL
7
COMMUNICATION CONTROL APPARATUS
5
COMMUNICATION TERMINAL
9a
COMMUNICATION TERMINAL
9b
RECEIVE OPERATION FOR STARTING IMAGE AND SOUND RECORDING
S31
INSTRUCTION TO SHARE FIELD-OF-VIEW INFORMATION (VIRTUAL ROOM ID, DEVICE ID)
S32
INSTRUCTION TO START RECORDING (CONTENT URL) AND REQUEST TO UPLOAD FIELD OF VIEW INFORMATION (FIELD-OF-VIEW INFORMATION URL)
S33
REQUEST TO UPLOAD FIELD-OF-VIEW INFORMATION (FIELD OF VIEW INFORMATION URL)
S34
REQUEST TO UPLOAD FIELD OF VIEW INFORMATION (FIELD-OF-VIEW INFORMATION URL)
S35
START RECORDING IMAGE AND SOUND
S36
FIELD-OF-VIEW INFORMATION (USER ID)
S37
FIELD-OF-VIEW INFORMATION (USER ID)
S38
FIELD-OF-VIEW INFORMATION (USER ID)
S39

FIG. 19

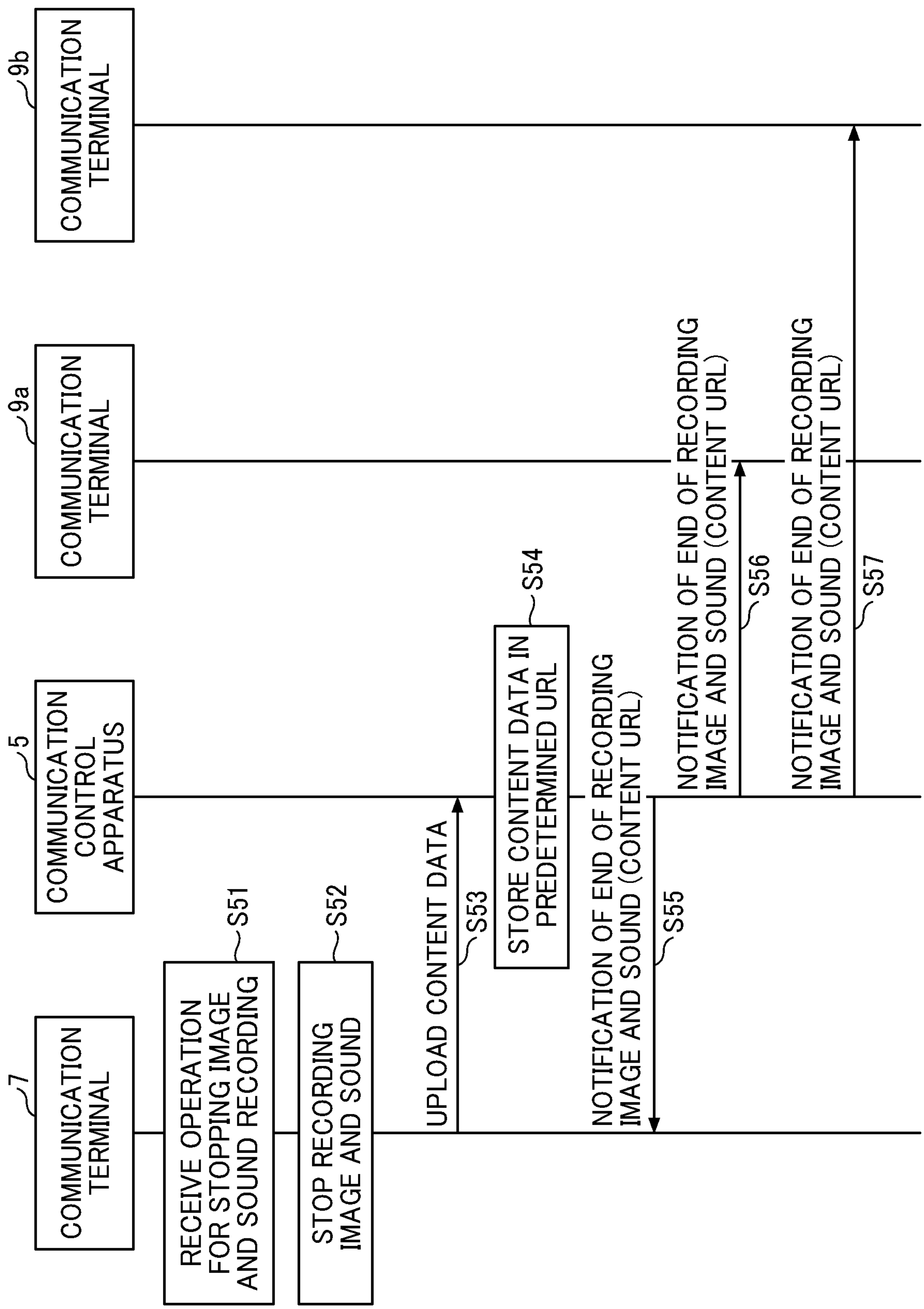
7
COMMUNICATION TERMINAL
5
COMMUNICATION CONTROL APPARATUS
9a
COMMUNICATION TERMINAL
9b
COMMUNICATION TERMINAL
S51
RECEIVE OPERATION FOR STOPPING IMAGE AND SOUND RECORDING
S52
STOP RECORDING IMAGE AND SOUND
S53
UPLOAD CONTENT DATA
S54
STORE CONTENT DATA IN PREDETERMINED URL
S55
NOTIFICATION OF END OF RECORDING IMAGE AND SOUND (CONTENT URL)
S56
NOTIFICATION OF END OF RECORDING IMAGE AND SOUND (CONTENT URL)
S57
NOTIFICATION OF END OF RECORDING IMAGE AND SOUND (CONTENT URL)

FIG. 20

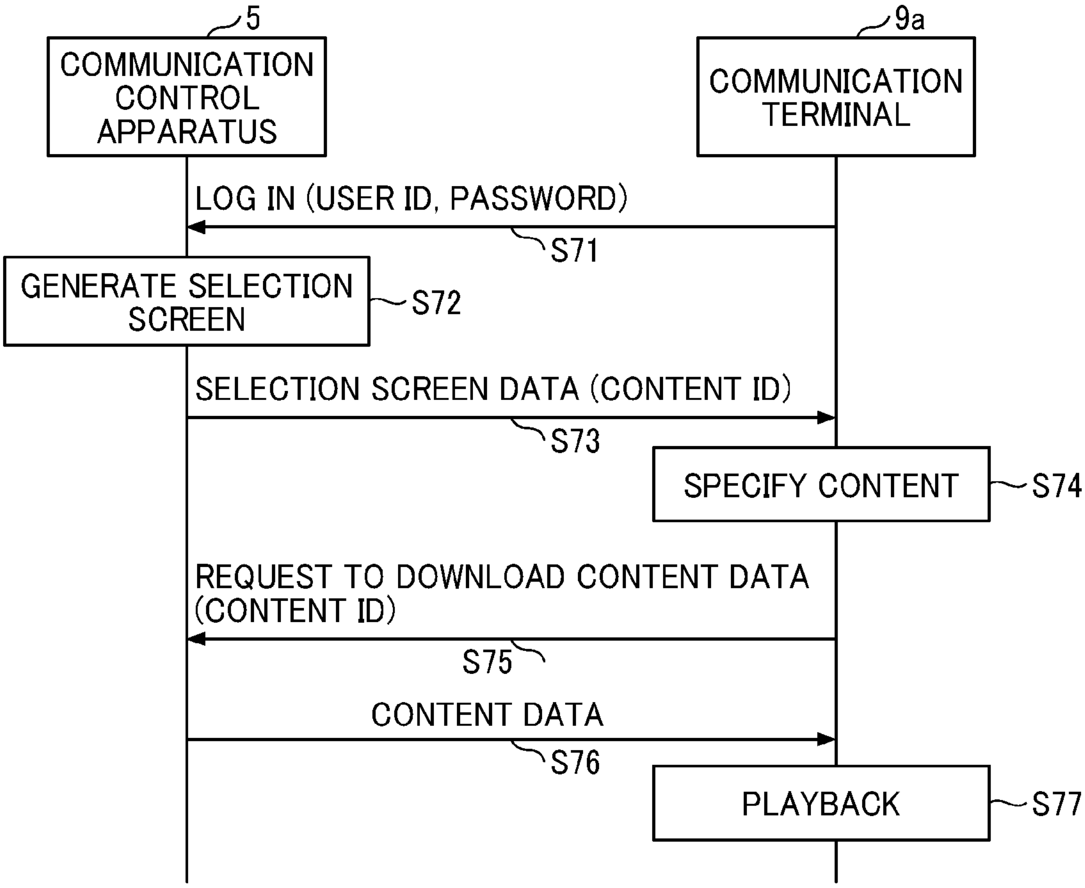
5
COMMUNICATION CONTROL APPARATUS
9a
COMMUNICATION TERMINAL
LOG IN (USER ID, PASSWORD)
S71
GENERATE SELECTION SCREEN
S72
SELECTION SCREEN DATA (CONTENT ID)
S73
SPECIFY CONTENT
S74
REQUEST TO DOWNLOAD CONTENT DATA (CONTENT ID)
S75
CONTENT DATA
S76
PLAYBACK
S77

FIG. 21

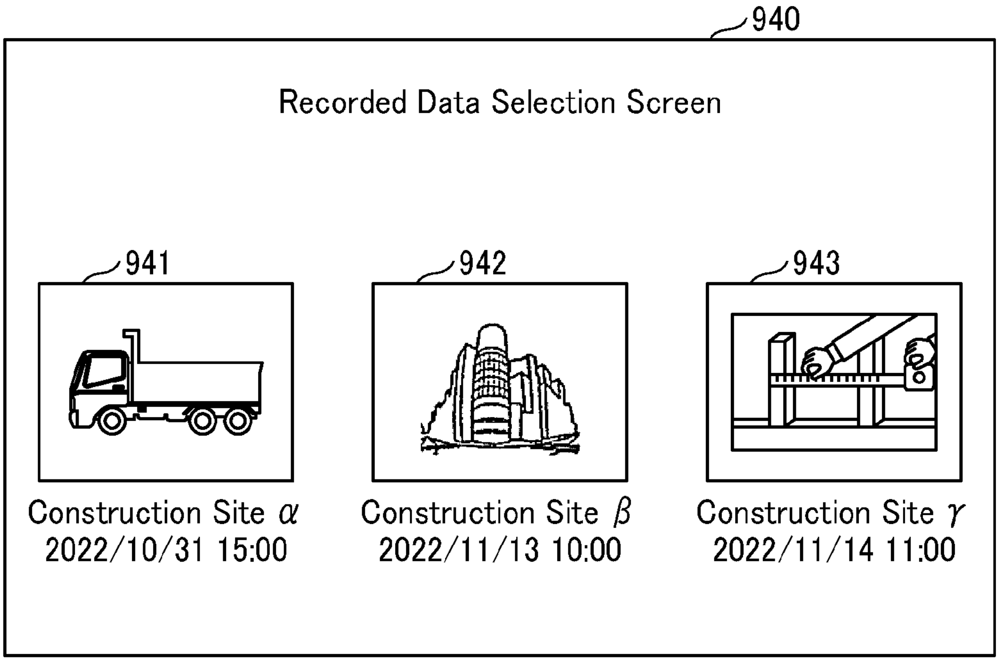
940
Recorded Data Selection Screen
941
942
943
Construction Site α
2022/10/31 15:00
Construction Site β
2022/11/13 10:00
Construction Site γ
2022/11/14 11:00

FIG. 22

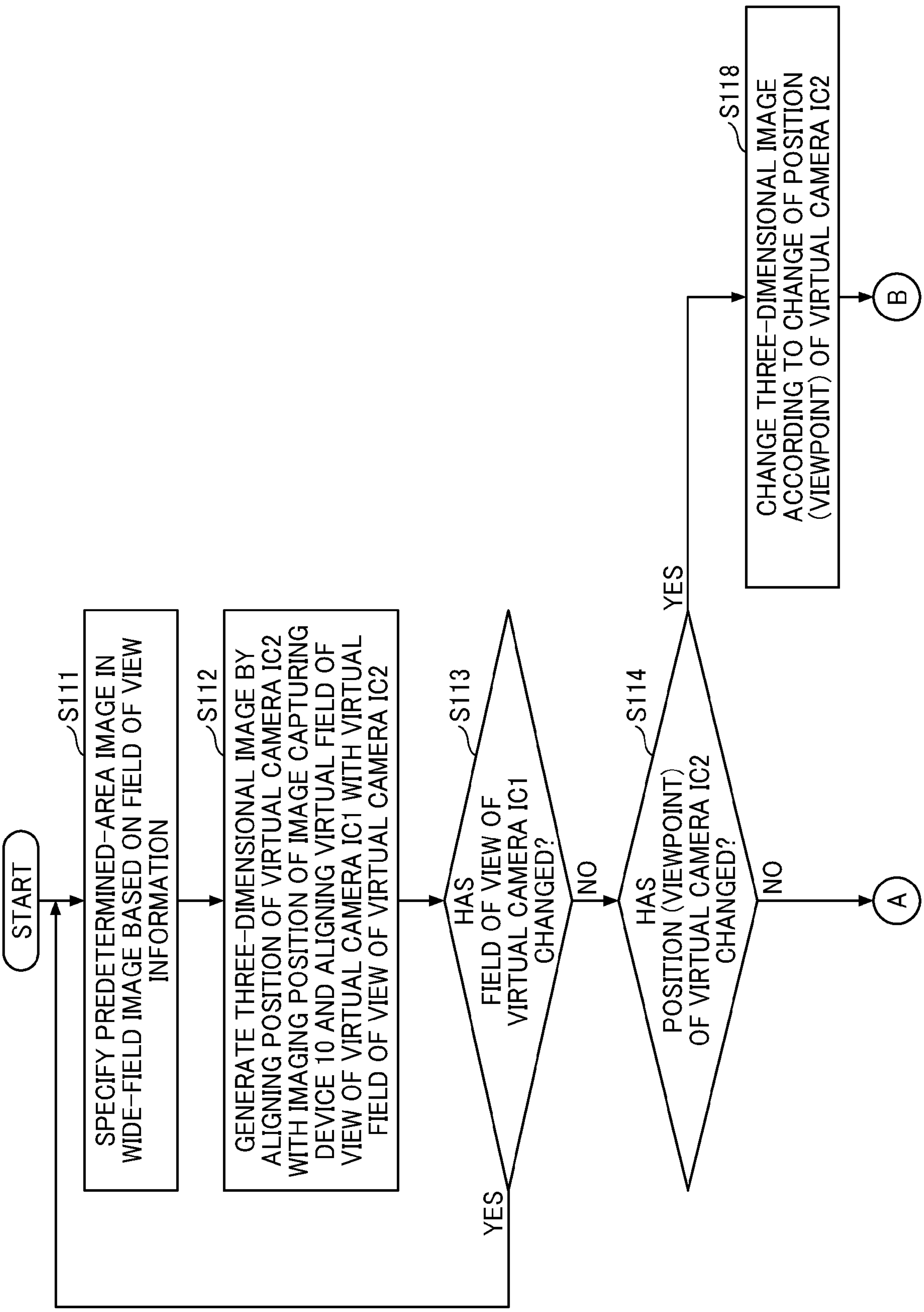
START
SPECIFY PREDETERMINED-AREA IMAGE IN WIDE-FIELD IMAGE BASED ON FIELD OF VIEW INFORMATION
S111
GENERATE THREE-DIMENSIONAL IMAGE BY ALIGNING POSITION OF VIRTUAL CAMERA IC2 WITH IMAGING POSITION OF IMAGE CAPTURING DEVICE 10 AND ALIGNING VIRTUAL FIELD OF VIEW OF VIRTUAL CAMERA IC1 WITH VIRTUAL FIELD OF VIEW OF VIRTUAL CAMERA IC2
S112
HAS FIELD OF VIEW OF VIRTUAL CAMERA IC1 CHANGED?
S113
YES
NO
HAS POSITION (VIEWPOINT) OF VIRTUAL CAMERA IC2 CHANGED?
S114
YES
NO
CHANGE THREE-DIMENSIONAL IMAGE ACCORDING TO CHANGE OF POSITION (VIEWPOINT) OF VIRTUAL CAMERA IC2
S118
A
B

FIG. 23

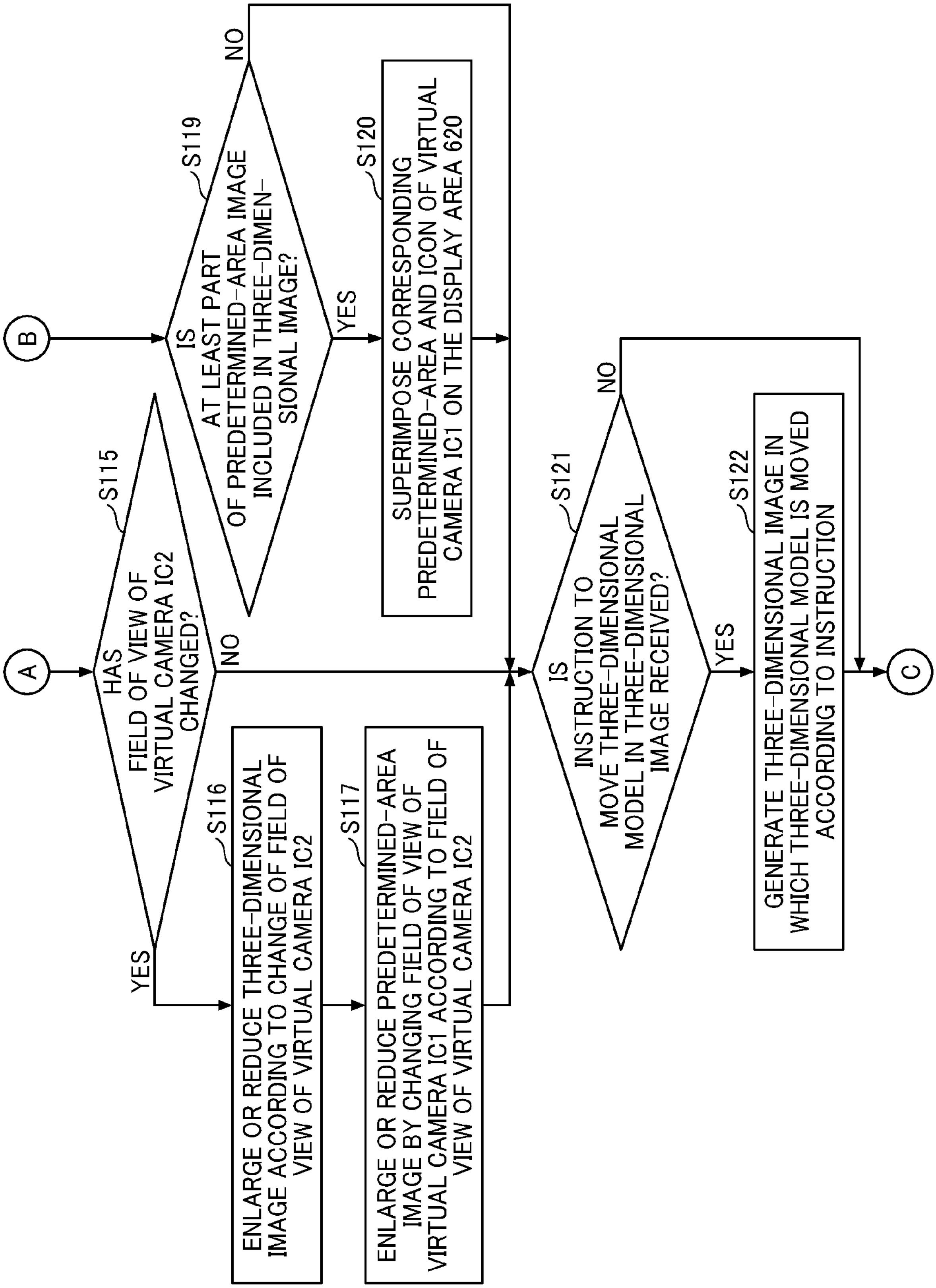
A
B
C
S115
HAS FIELD OF VIEW OF VIRTUAL CAMERA IC2 CHANGED?
YES
NO
S116
ENLARGE OR REDUCE THREE-DIMENSIONAL IMAGE ACCORDING TO CHANGE OF FIELD OF VIEW OF VIRTUAL CAMERA IC2
S117
ENLARGE OR REDUCE PREDETERMINED-AREA IMAGE BY CHANGING FIELD OF VIEW OF VIRTUAL CAMERA IC1 ACCORDING TO FIELD OF VIEW OF VIRTUAL CAMERA IC2
S119
IS AT LEAST PART OF PREDETERMINED-AREA IMAGE INCLUDED IN THREE-DIMENSIONAL IMAGE?
YES
NO
S120
SUPERIMPOSE CORRESPONDING PREDETERMINED-AREA AND ICON OF VIRTUAL CAMERA IC1 ON THE DISPLAY AREA 620
S121
IS INSTRUCTION TO MOVE THREE-DIMENSIONAL MODEL IN THREE-DIMENSIONAL IMAGE RECEIVED?
YES
NO
S122
GENERATE THREE-DIMENSIONAL IMAGE IN WHICH THREE-DIMENSIONAL MODEL IS MOVED ACCORDING TO INSTRUCTION

FIG. 24

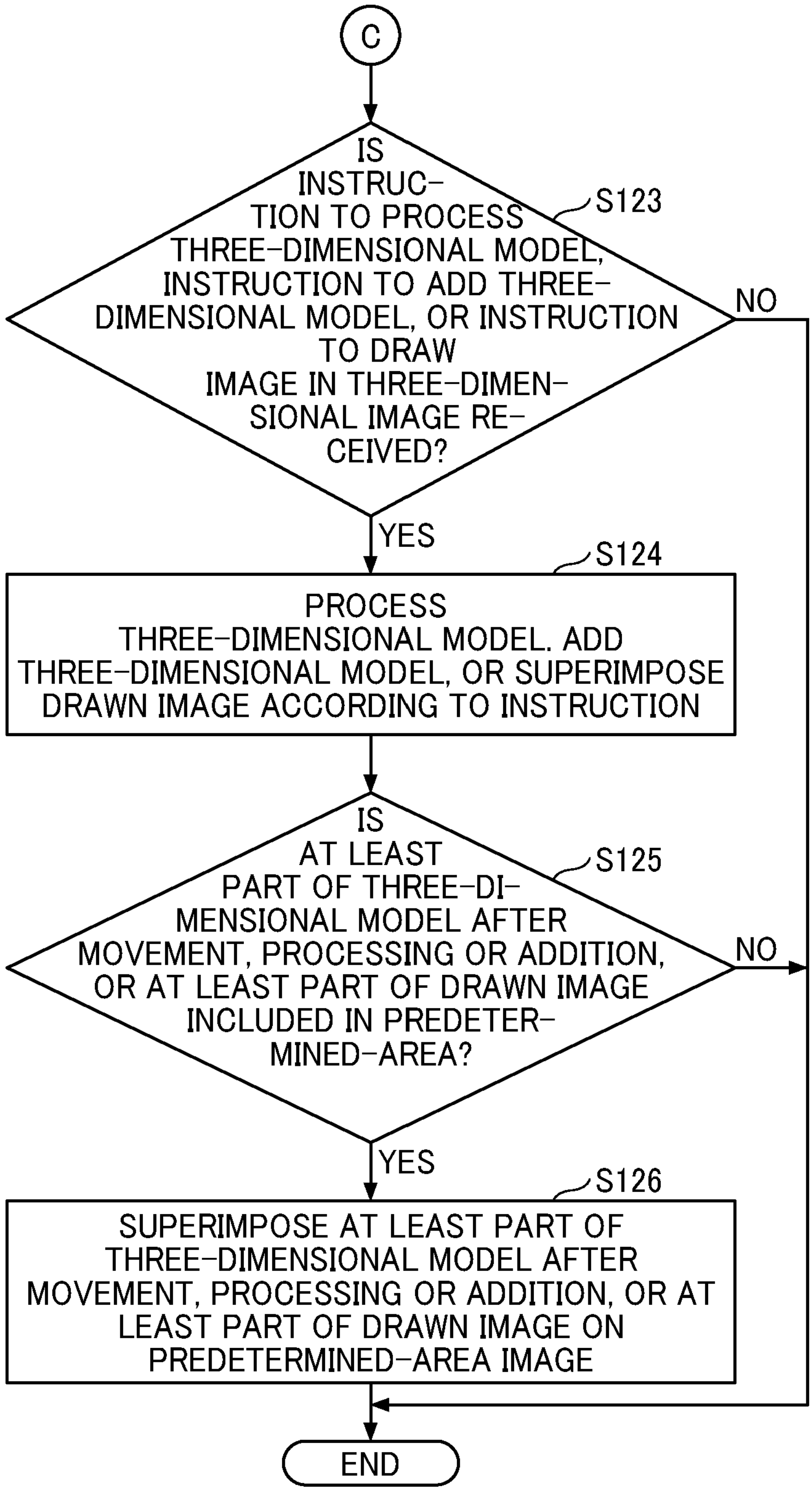
C
IS INSTRUCTION TO PROCESS THREE-DIMENSIONAL MODEL, INSTRUCTION TO ADD THREE-DIMENSIONAL MODEL, OR INSTRUCTION TO DRAW IMAGE IN THREE-DIMENSIONAL IMAGE RECEIVED?
S123
NO
YES
S124
PROCESS THREE-DIMENSIONAL MODEL. ADD THREE-DIMENSIONAL MODEL, OR SUPERIMPOSE DRAWN IMAGE ACCORDING TO INSTRUCTION
IS AT LEAST PART OF THREE-DIMENSIONAL MODEL AFTER MOVEMENT, PROCESSING OR ADDITION, OR AT LEAST PART OF DRAWN IMAGE INCLUDED IN PREDETERMINED-AREA?
S125
NO
YES
S126
SUPERIMPOSE AT LEAST PART OF THREE-DIMENSIONAL MODEL AFTER MOVEMENT, PROCESSING OR ADDITION, OR AT LEAST PART OF DRAWN IMAGE ON PREDETERMINED-AREA IMAGE
END

FIG. 25

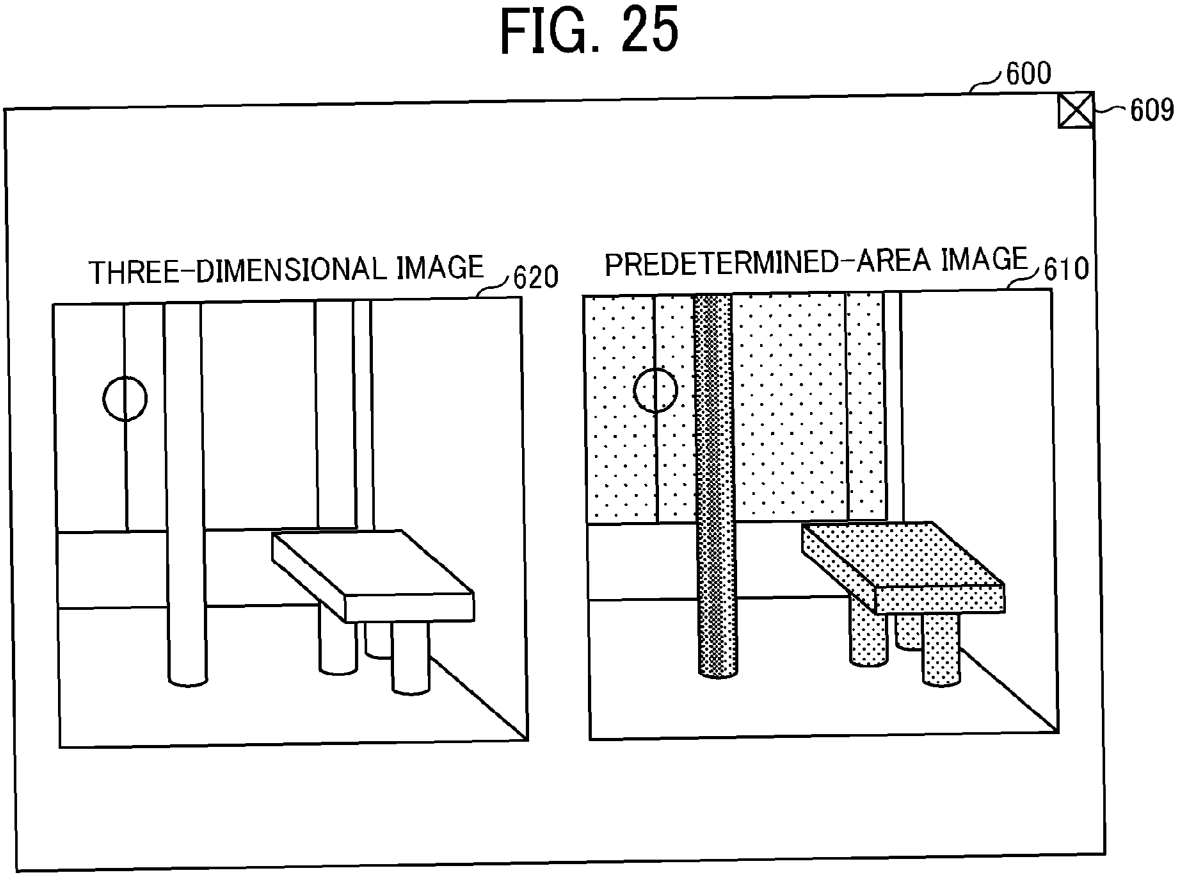
600
609
THREE-DIMENSIONAL IMAGE
620
PREDETERMINED-AREA IMAGE
610

FIG. 26

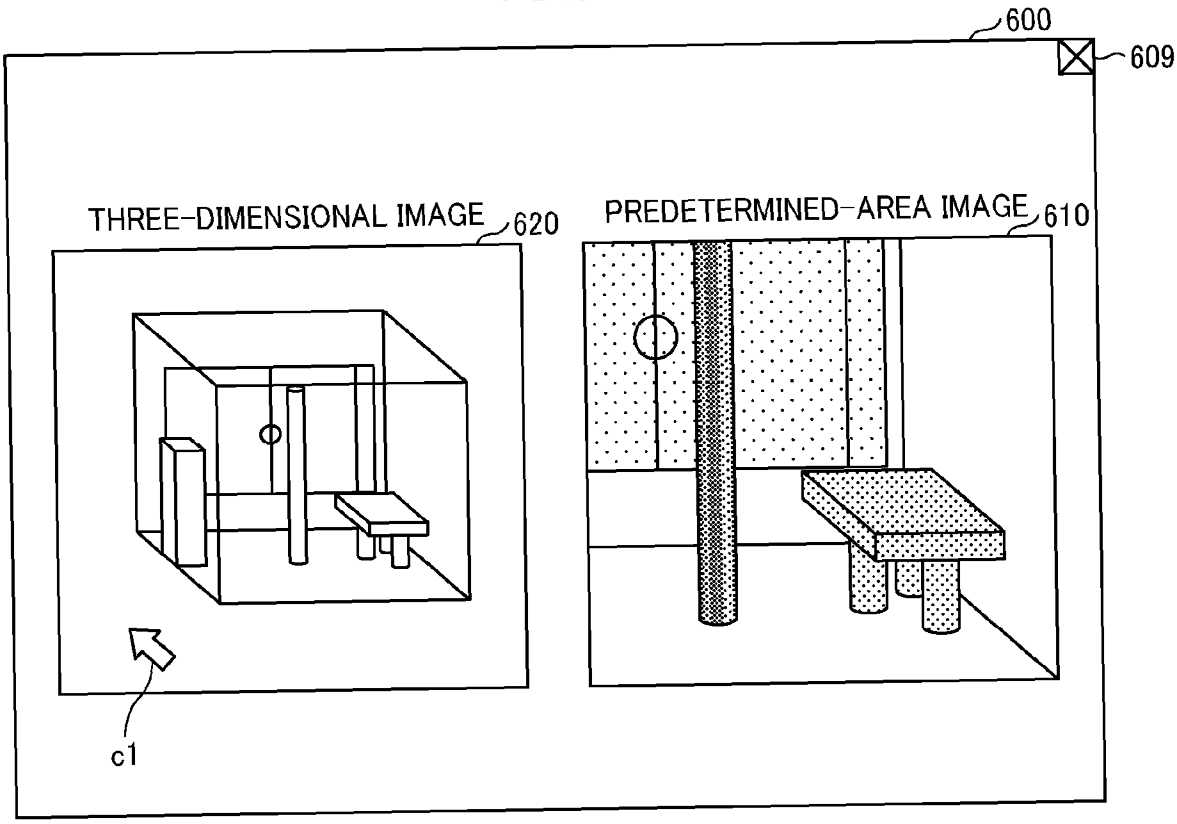
600
609
THREE-DIMENSIONAL IMAGE
620
PREDETERMINED-AREA IMAGE
610
c1

FIG. 27A

ORIENTED TO SOUTH

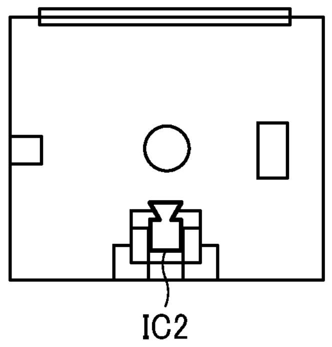


FIG. 27B

ORIENTED TO EAST

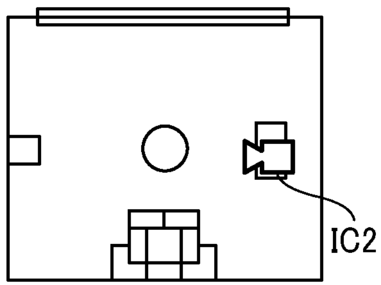


FIG. 27C

ORIENTED TO NORTH

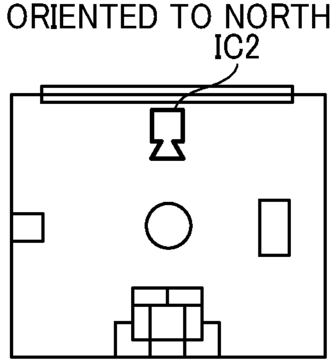


FIG. 27D

ORIENTED TO WEST

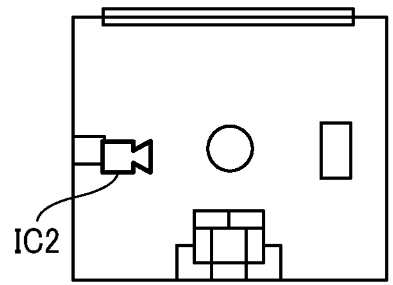


FIG. 27E

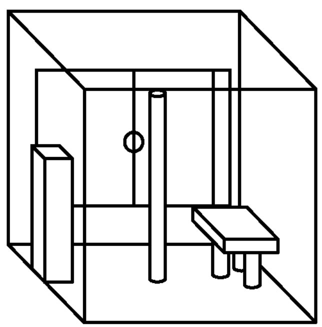

FIG. 27F

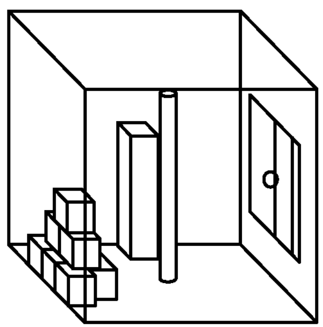

FIG. 27G

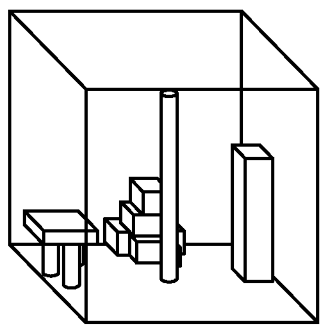

FIG. 27H

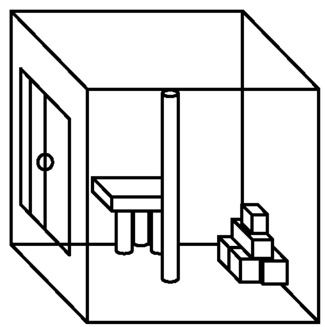

FIG. 28

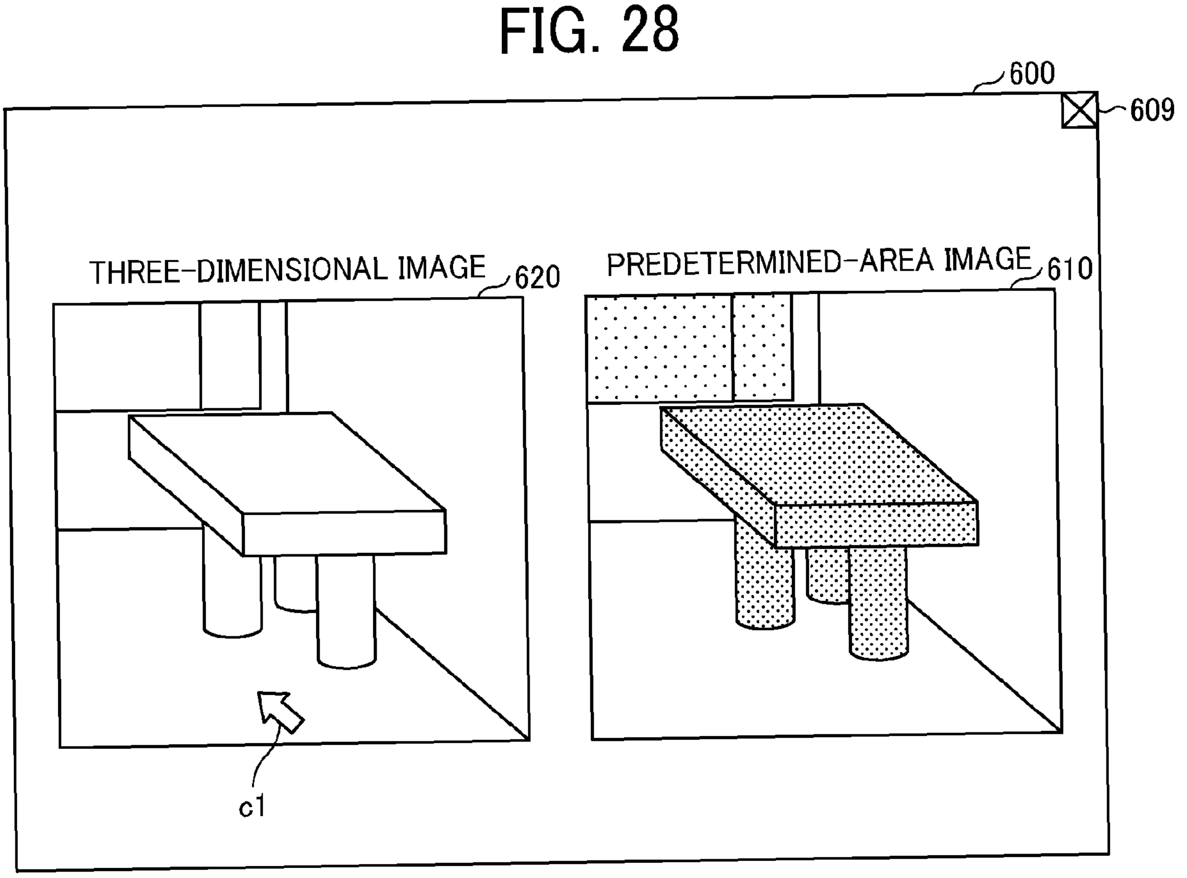
600
609
THREE-DIMENSIONAL IMAGE
620
PREDETERMINED-AREA IMAGE
610
c1

FIG. 29

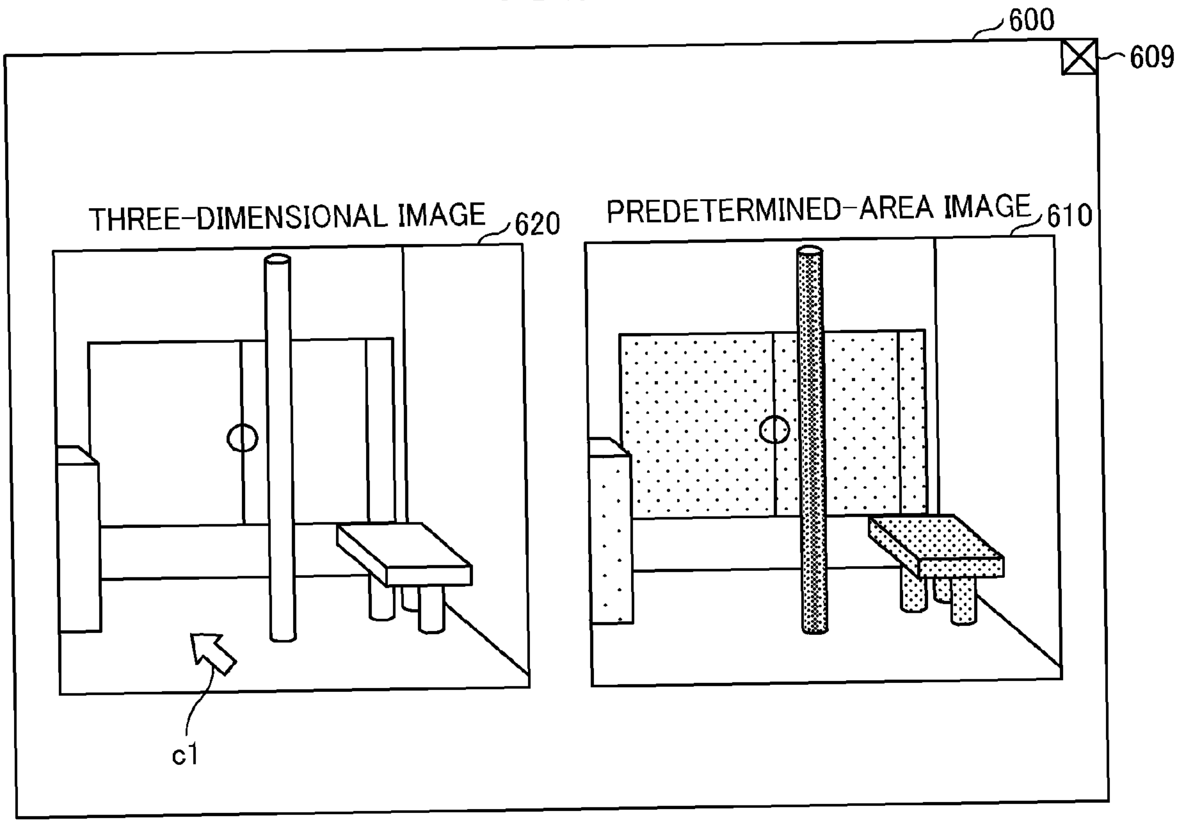
600
609
THREE-DIMENSIONAL IMAGE
620
PREDETERMINED-AREA IMAGE
610
c1

FIG. 30

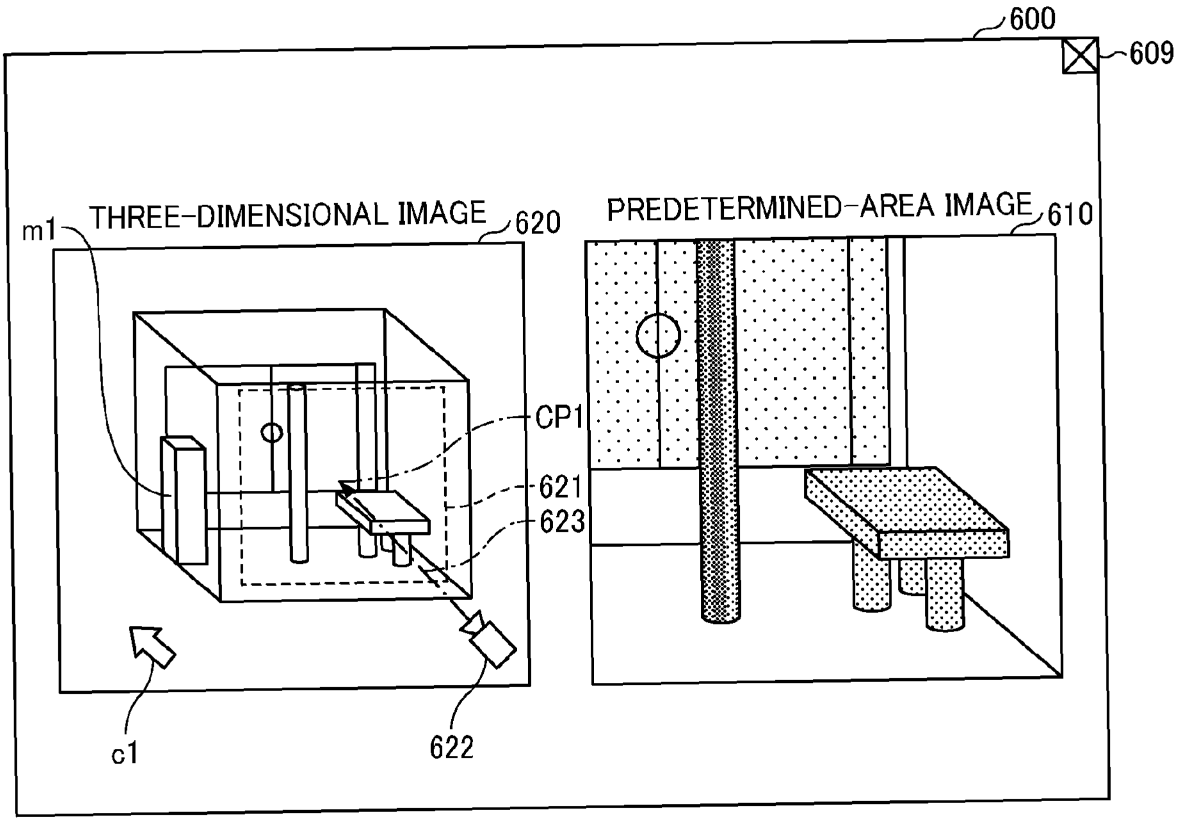
600
609
THREE-DIMENSIONAL IMAGE
620
PREDETERMINED-AREA IMAGE
610
m1
CP1
621
623
c1
622

FIG. 31

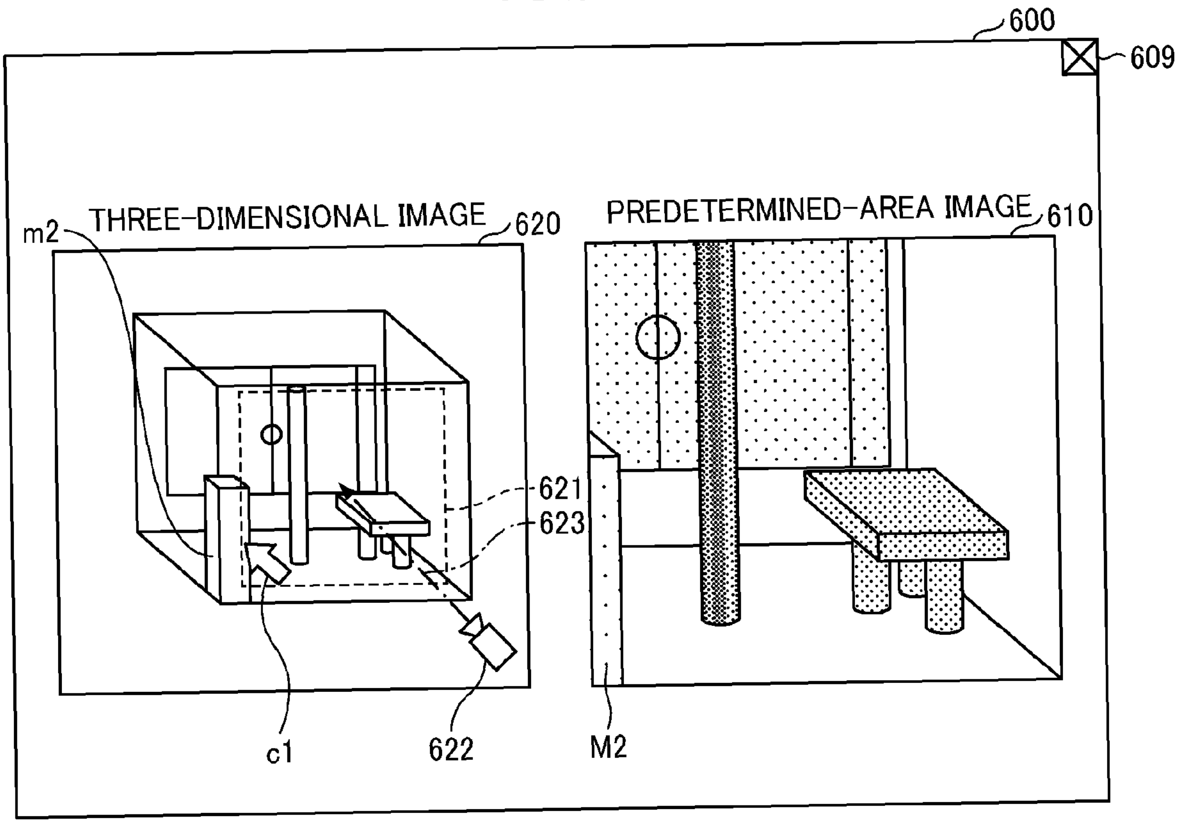
600
609
THREE-DIMENSIONAL IMAGE
620
PREDETERMINED-AREA IMAGE
610
m2
621
623
c1
622
M2

FIG. 32

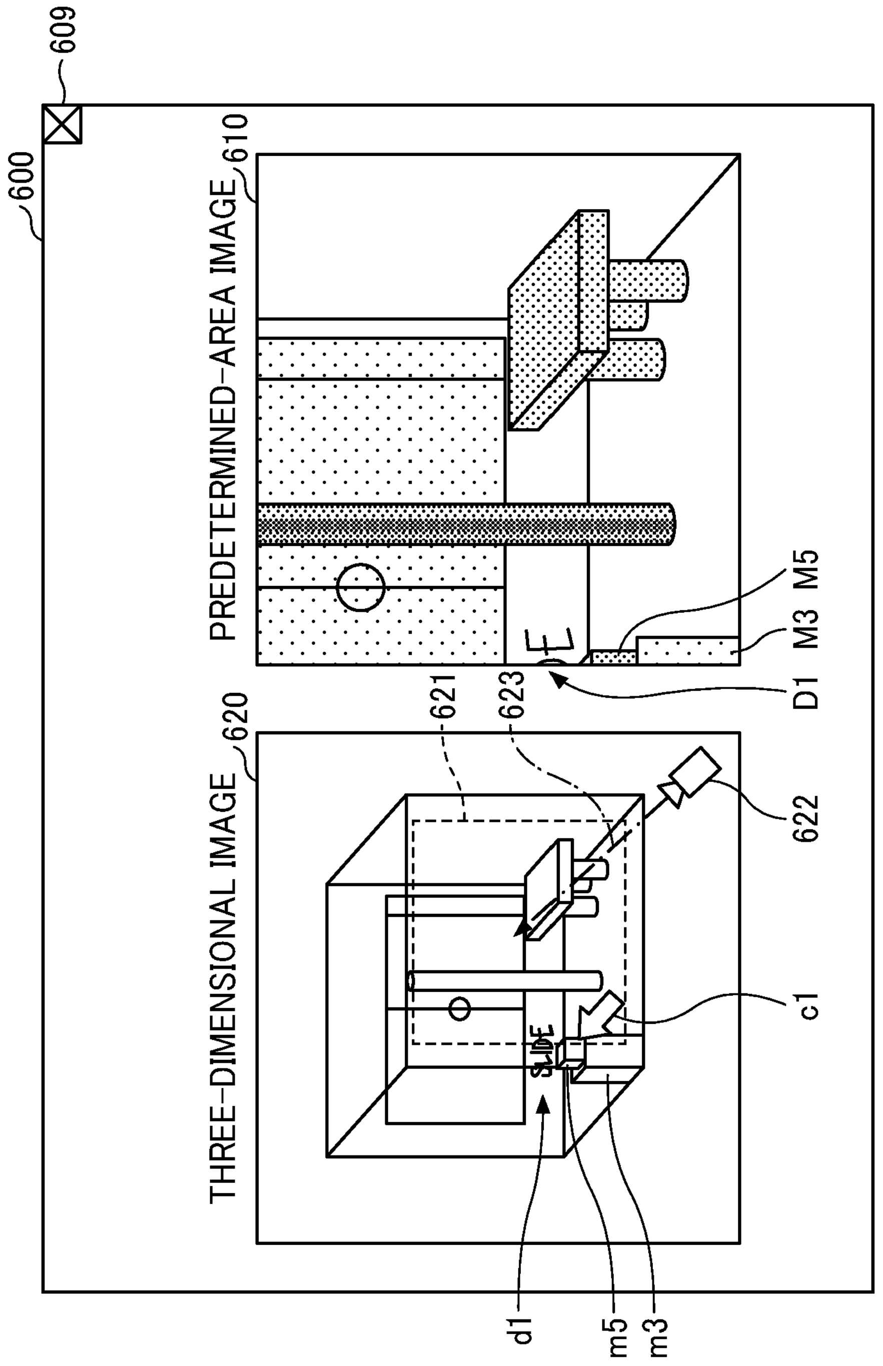
600
609
PREDETERMINED-AREA IMAGE
610
THREE-DIMENSIONAL IMAGE
620
621
623
622
SLIDE
c1
d1
m5
m3
D1
M3
M5

Europäisches Patentamt
European Patent Office
Office européen des brevets

# EUROPEAN SEARCH REPORT

Application Number
EP 25 15 4338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Scanner2go Gmbh: "09 - Leica CloudWorx TruSpace - Scanner2GO", Youtube.com, 10 November 2019 (2019-11-10), XP055813021, Retrieved from the Internet: URL:https://www.youtube.com/watch?v=s6QVHPSgSKk | 1-8, 10-15 | INV. G06T19/00 G06T15/10 |
| Y | * 2:30-4:00 * | 1,9, 13-15 | |
| Y | EP 4 109 413 A1 (FUJIFILM CORP [JP]) 28 December 2022 (2022-12-28) * paragraphs [0047] - [0051], [0032]; figures 6-8 * * abstract * | 1,9, 13-15 | |

TECHNICAL FIELDS SEARCHED (IPC)

G06T

The present search report has been drawn up for all claims

| Place of search | Date of completion of the search | Examiner |
|---|---|---|
| Berlin | 9 May 2025 | Gao, Miao |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 4338

This annex lists the patent family members relating to the patent documents cited in the above-mentioned European search report. The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| EP 4109413 A1 | 28-12-2022 | CN 115088020 A | 20-09-2022 |
| | | EP 4109413 A1 | 28-12-2022 |
| | | JP 7392101 B2 | 05-12-2023 |
| | | JP WO2021166381 A1 | 26-08-2021 |
| | | US 2022366673 A1 | 17-11-2022 |
| | | WO 2021166381 A1 | 26-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023010923 A